Europäisches Patentamt

European Patent Office

Office européen des brevets

(11) Publication number: **0 317 235 B1**

# EUROPEAN PATENT SPECIFICATION

(45) Date of publication of patent specification: **12.10.94**　(51) Int. Cl.⁵: **C01B 3/56**, C01B 3/38, B01D 53/04

(21) Application number: **88310723.7**

(22) Date of filing: **14.11.88**

(54) Separation of gas mixtures including hydrogen.

(30) Priority: **16.11.87 GB 8726804**

(43) Date of publication of application:
**24.05.89 Bulletin 89/21**

(45) Publication of the grant of the patent:
**12.10.94 Bulletin 94/41**

(84) Designated Contracting States:
**BE DE FR GB IT NL**

(56) References cited:
**EP-A- 0 008 882**
**EP-A- 0 289 877**
**EP-A- 0 307 843**
**DE-A- 3 427 804**

(73) Proprietor: **The BOC Group plc**
**Chertsey Road**
**Windlesham Surrey GU20 6HJ (GB)**

(72) Inventor: **Krishnamurthy, Ramachasdran**
**142 Middlesex Avenue**
**Piscataway New Jersey 08854 (US)**
Inventor: **Stokley, Alan George**
**7 Martins Drive**
**Wokingham Berkshire RG11 1NY (GB)**
Inventor: **Lerner, Steven L.**
**41 Holly Glen Lane**
**South Berkeley Heights New Jersey 07922**
**(US)**
Inventor: **Shukla, Yagya**
**141 Warren Avenue**
**Roselle Park New Jersey 07204 (US)**

(74) Representative: **Wickham, Michael et al**
**c/o Patent and Trademark Department**
**The BOC Group plc**
**Chertsey Road**
**Windlesham Surrey GU20 6HJ (GB)**

Rank Xerox (UK) Business Services
(3. 10/3.09/3.3.3)

## Description

This invention relates to the separation of gas mixtures typically including hydrogen. It is particularly concerned with the separation of gas mixtures including hydrogen that are formed by reforming hydrocarbon with steam. The reaction between hydrocarbon and steam produces a gas mixture comprising hydrogen, carbon monoxide, carbon dioxide and water vapour as well as typically some residual methane.

Various processes are known for separating pure product from such mixtures. Some processes include an initial so-called shift reaction in which the carbon monoxide is converted to carbon dioxide. Such processes are unsuitable for use when carbon monoxide is desired as a product. These and other processes frequently employ cryogenic distillation in order to effect separation between hydrogen and the other constituents of the mixture after removal of carbon dioxide. However, cryogenic separation processes tend to have a high capital cost, particularly if more than one pure product is required.

The separation of hydrogen-rich gas mixtures, that is gas mixtures containing more than 50% by volume of hydrogen, by pressure swing adsorption is also well known. One such pressure swing adsorption (PSA) cycle for separating hydrogen-rich gas mixture is disclosed in US-A-3 430 418. In the cycles disclosed therein, the hydrogen- rich gas mixture is separated into hydrogen product and a waste gas stream. Many commercially practised PSA processes utilise a similar cycle. They all have in common the feature of separating the incoming gas mixture into a hydrogen product stream and a single vent gas stream. The vent gas stream is however generally unsuitable for the production of carbon monoxide as its carbon monoxide content is relatively low.

A more elaborate PSA cycle for separating a gas mixture rich in hydrogen is described in EP-A-8882. The disclosed cycles are stated to be suitable for separating a gas mixture comprising hydrogen, methane, and $C_2$ or higher hydrocarbons to recover separate hydrogen and methane products. There is no discussion of the use of the cycle to separate hydrogen and carbon monoxide products from a gas mixture comprising hydrogen, carbon monoxide and carbon dioxide, and hence there is no discussion as to how the process might be integrated into a plant using a steam reformer to produce hydrogen and carbon monoxide products.

Another proposal for separating gas mixtures comprising hydrogen and two other components is disclosed in WO-A-86/05414. An example is given in this patent application of the separation of gas mixtures rich in hydrogen and carbon monoxide and with relatively low proportions of carbon dioxide (e.g. 1.5% by volume). There is no disclosure as to how such a process might be integrated into a plant for reforming hydrocarbon by reaction with steam. Moreover, the carbon dioxide concentrations from such a reformer are generally considerably higher than 1.5% by volume. In addition, the disclosed process withdraws both hydrogen and carbon monoxide-enriched gas from the same location. In practice, this makes it difficult to obtain a high purity hydrogen product.

There is thus a need for a non-cryogenic method which makes possible the efficient production of relatively pure hydrogen and carbon monoxide products from a gas mixture formed by reforming hydrocarbon with steam. Such a need is not met by a process described in DE-A-3 427 804 which discloses reforming hydrocarbon with carbon dioxide and then separating the resultant mixture into separate streams comprising carbon monoxide, hydrogen and carbon dioxide but discloses no specific means for effecting this separation.

According to the present invention there is provided a method of forming hydrogen and carbon monoxide products from hydrocarbon, comprising reforming hydrocarbon to form a gas mixture including hydrogen, carbon monoxide, and carbon dioxide, and subjecting the gas mixture to separation by pressure swing adsorption to produce a hydrogen product, a carbon monoxide product and a gas mixture enriched in carbon dioxide, wherein the hydrocarbon is reformed with at least some of the gas mixture enriched in carbon dioxide or with carbon dioxide from a separate source, characterised in that steam is employed in addition to carbon dioxide in the reforming of the hydrocarbon, and the separation by pressure swing adsorption is performed in first and second stages, the first stage producing the hydrogen product, the gas mixture enriched in carbon dioxide, and a gas mixture enriched in carbon monoxide, at least some of the gas mixture enriched in carbon monoxide being separated in the second stage to produce the carbon monoxide product.

The invention also provides apparatus for forming hydrogen and carbon monoxide products from hydrocarbon comprising a reformer for converting hydrocarbon to gas mixture comprising hydrogen, carbon monoxide and carbon dioxide, a means for separating said gas mixture by pressure swing adsorption to produce a hydrogen product, a carbon monoxide product and a gas mixture enriched in carbon dioxide, and means for introducing at least some of the gas mixture enriched in carbon dioxide or carbon dioxide from a separate source into the reformer for reaction with the hydrocarbon, characterised in that the reformer has an inlet for the introduction thereto of steam, and the means for separating the gas mixture comprising hydrogen, carbon monoxide and carbon dioxide comprises a first group of adsorbers for producing the hydrogen product, the gas mixture enriched in carbon dioxide, and a gas mixture enriched in carbon monoxide, and a second group of adsorbers for separating the carbon monoxide product from the gas mixture enriched in carbon monoxide.

The method and apparatus according to the invention make possible the production of relatively pure carbon monoxide and hydrogen products. Hydrogen may be produced in such purity that it contains less than one volume per million of carbon monoxide. Moreover, a carbon monoxide product containing less than 200 volumes per million of methane may also be produced.

Employing at least some of the gas mixture enriched in carbon dioxide to reform the hydrocarbon helps to boost the proportion of carbon monoxide in the gas mixture leaving the reformer and thus increases the rate of production of carbon monoxide. Thus the separation of the gas mixture comprising hydrogen, carbon monoxide and carbon dioxide into hydrogen product, a gas mixture enriched in carbon monoxide, and a gas mixture enriched in carbon dioxide is performed by repeating a cycle of operations including passing said gaseous mixture through first and second adsorptive regions in series, both said adsorptive regions comprising adsorbent on which carbon monoxide is more readily adsorbed than hydrogen but less readily adsorbed than carbon dioxide, withdrawing said hydrogen product from the downstream end of said second region, stopping admission of the said gas mixture comprising hydrogen, carbon monoxide and carbon dioxide to the first adsorptive region, withdrawing said gas mixture enriched in carbon monoxide from both adsorbent regions at a location intermediate said first and second adsorbent regions, and then withdrawing said gas mixture enriched in carbon dioxide from the feed end of said first adsorbent region.

By taking these gas mixtures enriched in carbon monoxide and carbon dioxide respectively from different positions relative to the adsorbent it is possible to enhance the carbon monoxide content of the gas mixture enriched in carbon monoxide. Moreover, by withdrawing the gas mixture enriched in carbon monoxide from both adsorptive regions, the final yield of carbon monoxide is greater than if the gas mixture enriched in carbon monoxide is taken from just one of the adsorbent regions.

Normally, the aforesaid pressure swing adsorption cycle will use at least two pairs and, preferably, at least four pairs of such first and second regions, each pair performing the cycle of operations in chosen phase relationship to the others. Typically, intermediate the steps of producing the hydrogen product and the gas mixture enriched in carbon monoxide, the pressures in the first and second adsorptive regions are equalised with the pressures in another pair of first and second adsorption regions. Further, after the step of producing the gas mixture enriched in carbon dioxide, the first and second adsorptive regions are preferably placed in communication with another pair of first and second regions at a higher pressure so as to build-up the pressure to a first level, and then the pressure is increased again by repressurising the beds with product hydrogen.

The gaseous mixture enriched in carbon monoxide may be withdrawn from both said first and second adsorbent regions simultaneously. Alternatively, the gas mixture enriched in carbon monoxide is withdrawn first from said second region and then from said first region. This procedure enables said first adsorptive region to have introduced into it from its feed end a portion of said gas mixture enriched in carbon dioxide from another pair of first and second adsorptive regions while the second adsorptive region is producing the gas mixture enriched in carbon monoxide. Since the ratio of carbon dioxide to hydrogen or carbon monoxide is higher in the gas mixture enriched in carbon dioxide than it is in the feed gas mixture comprising hydrogen, carbon monoxide and carbon dioxide, admission of a portion of the gas mixture enriched in carbon dioxide to the first region while the second region is producing gas mixture enriched in carbon monoxide helps to displace hydrogen and carbon monoxide away from the feed end towards said intermediate location. Accordingly, when it is the turn of the first adsorption region to produce gas mixture enriched in carbon monoxide, there is a greater concentration of carbon monoxide in the unadsorbed gas immediately adjacent the said intermediate location and thus the proportion of carbon monoxide in the gas mixture withdrawn from that location is enhanced. The presence of two adsorptive regions and the withdrawal of carbon monoxide-rich gas mixture from an intermediate location is the most effective use of the carbon dioxide rich gas mixture in terms of displacing carbon monoxide. Allowing time for carbon monoxide displacement after admitting the carbon dioxide rich mixture enhances the displacement thereby, producing a very high recovery of carbon monoxide.

Preferably, not all the gas mixture enriched in carbon dioxide is employed to reform hydrocarbon even in the event that none of this gas mixture is used to displace carbon monoxide from the first adsorptive region prior to production of gas mixture enriched in carbon monoxide from such region. In addition it is preferred that some of the gas mixture enriched in carbon dioxide is employed as fuel in the reformer. Such gas mixture enriched in carbon dioxide will meet only a proportion of the requirements for fuel of the

EP 0 317 235 B1

reformer, and typically a portion of the hydrocarbon feed to the reformer is also used a fuel.

The further sorptive separation stage in which the gas mixture enriched in carbon monoxide is separated to yield a carbon monoxide product is preferably performed in two step. In a first step, constituents of the gas mixture more readily adsorbable than carbon monoxide are separated therefrom. This leaves a gas mixture comprising hydrogen and carbon monoxide. This gas mixture is then separated in the second step to form carbon monoxide product and a gas mixture rich in hydrogen. The gas mixture rich in hydrogen is preferably mixed with the gas mixture comprising hydrogen, carbon monoxide, and carbon dioxide that exits the reformer. Preferably, a proportion of the hydrogen-rich gas produced in the second step is recycled to the first step as purge gas, and at least part of the gas vented from the first step is collected and used as fuel in the reformer. A second portion of the gas vented from the first step is preferably returned to the incoming gas mixture including carbon monoxide.

Since in the second step the carbon monoxide is more readily adsorbed than hydrogen, the product carbon monoxide is withdrawn by desorption from the adsorbent, and in order to ensure a good yield, the desorption preferably takes place below atmospheric pressure.

In the first step of the two stage separation of carbon monoxide product from the gas mixture enriched in carbon monoxide preferably three beds of adsorbent are employed. Between production of the gas mixture feed to the second step and purging of the adsorbent, the adsorbent vessel is preferably subjected to a three step depressurisation process in which it is first reduced in pressure by placing it in communication with an equalisation vessel, then reduced again in pressure by passing gas from it to a tank in which waste gas for supply to the reformer is collected and finally reduced in pressure by placing it in communication with a tank in which the gas mixture enriched in carbon monoxide is collected. The equalisation tank is used after a purge step to repressurise the adsorbent.

The times for the above-mentioned second and third depressurization steps are selected to allow a desired flow split of the multicomponent gas mixture released from the adsorbent bed. The concentration of the multicomponent gas mixture continuously changes with time. Initially, it has a very high ratio of impurity (carbon dioxide) to desired product (carbon monoxide and hydrogen) which ratio decreases over time. The time-based split of the depressurization into two steps allows the collection of a first high impurity gas stream which is removed as a waste gas and a second low impurity gas which is recycled to the feed gas storage vessel for further processing.

The method and apparatus according to the present invention will now be described by way of example with reference to the accompanying drawings, in which :

Figure 1 is a schematic circuit diagram illustrating a plant for producing carbon monoxide and hydrogen products including a reformer, an apparatus for producing hydrogen by pressure swing adsorption, and an apparatus for producing carbon monoxide by pressure swing adsorption;

Figure 2 is a schematic diagram illustrating an apparatus for producing hydrogen product by pressure swing adsorption said apparatus being suitable for use in the plant shown in Figure 1;

Figure 3 is an alternative apparatus for producing hydrogen by pressure swing adsorption, said apparatus being suitable for use in the plant shown in Figure 1;

Figure 4 is a schematic diagram of an adsorber for use in the apparatus shown in Figure 2; and

Figure 5 is a schematic circuit diagram illustrating an apparatus for producing carbon monoxide by pressure swing adsorption, the apparatus being suitable for use in the plant shown in Figure 1;

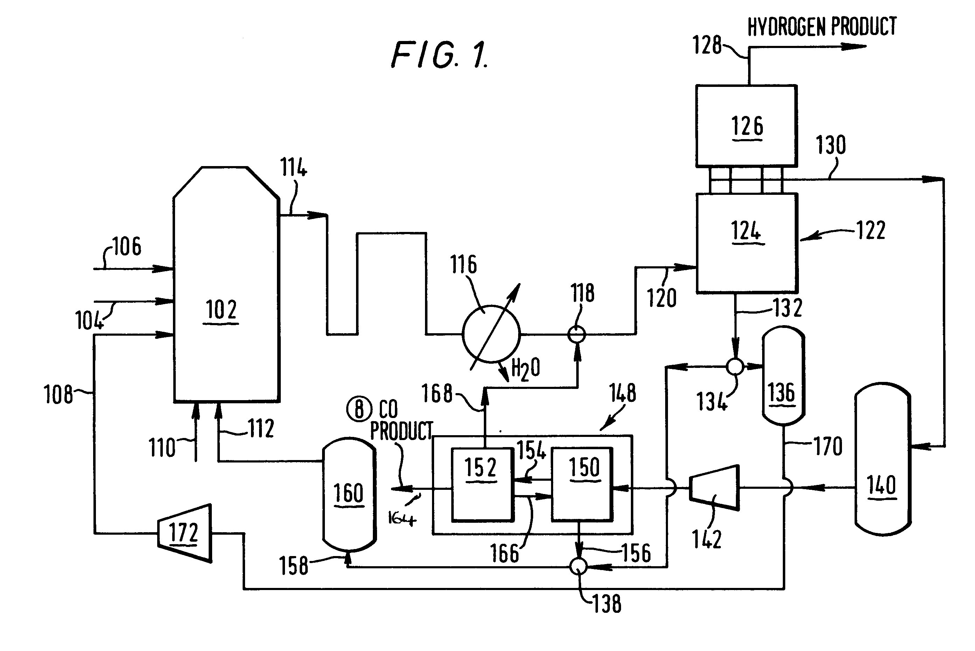

Referring to Figure 1 of the drawings, the illustrated plant includes a reformer 102 in which hydrocarbon introduced through inlet 104 is reacted with steam introduced through inlet 106 and the carbon dioxide content of a recycled carbon dioxide enriched gas stream introduced through inlet 108. The hydrocarbon typically comprises butane, though other lower alkanes may be used instead. In the event that such a higher hydrocarbon is used, it rapidly and irreversibly reacts with steam and carbon dioxide to form carbon monoxide, hydrogen and methane. The methane so-formed then reacts as aforesaid to produce further carbon monoxide and hydrogen.

4

The following chemical equilibria are set up

$$CH_4 + H_2O \rightleftharpoons CO + 3H_2$$

$$CH_4 + CO_2 \rightleftharpoons 2CO + 2H_2$$

$$CO + H_2O \rightleftharpoons CO_2 + H_2$$

It can thus be appreciated that recycling the carbon dioxide enriched gas mixture to the reformer 102 enhances the carbon monoxide content of the gas mixture produced by the reformer. Preferably, the rate of recycle is such as to result in a carbon monoxide content of the gas mixture, excluding water, exiting the reformer 102 of from 14 to 20 mole per cent.

The resulting gas mixture comprising hydrogen, carbon monoxide, carbon dioxide, steam and unreacted methane leaves the reformer 102 through an outlet 114 at close to the operating temperature and pressure of the reformer 102. Typically, the reformer is operated at elevated pressure, for example, in the range 10 to 20 atmospheres absolute 1013 to 1027 kPa and at a temperature in the order of 700 to 900°C. Since the reactions of the hydrocarbon with carbon dioxide and with steam are endothermic, it is necessary to provide heat to the reformer. This is done by introducing hydrocarbon fuel into the reformer through an inlet 110 and burning it. In addition, recycled waste gas from a downstream stage of the process is introduced into the reformer 102 through an inlet 112 and combusted.

The gas mixture comprising hydrogen, carbon monoxide, carbon dioxide methane and steam exiting the reformer 102 is passed through a cooler 116 in which it is cooled to approximately ambient temperature, thereby being condensed. The cooler 116 separates condensed water from the gas mixture to form a saturated gas mixture comprising hydrogen, carbon monoxide, carbon dioxide and methane. The gas mixture is united in mixer 118, which if desired may merely be a union of two pipes, with another hydrogen-rich gas stream from a downstream part of the plant.

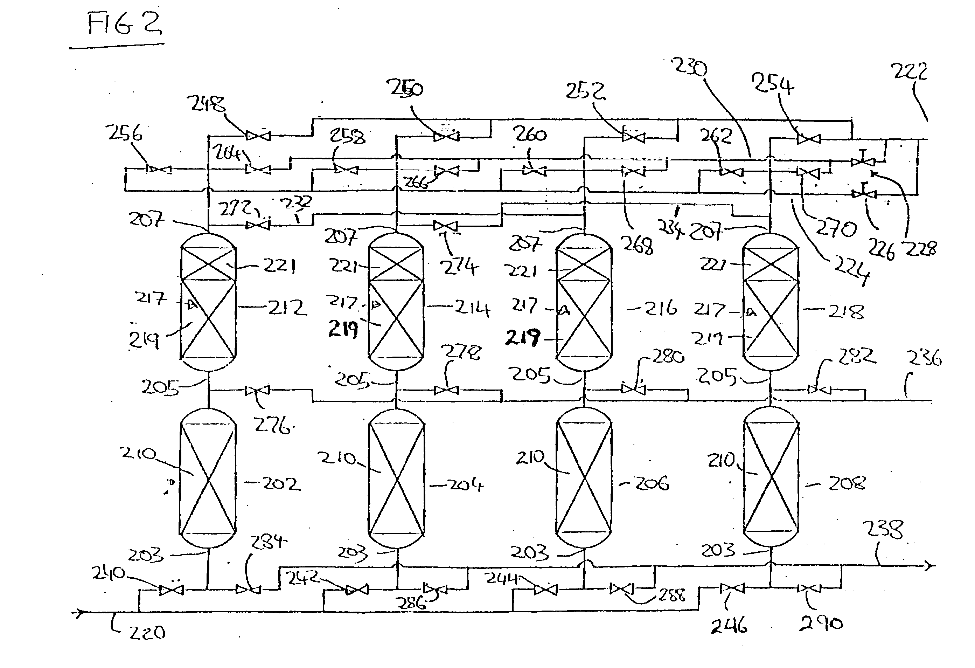

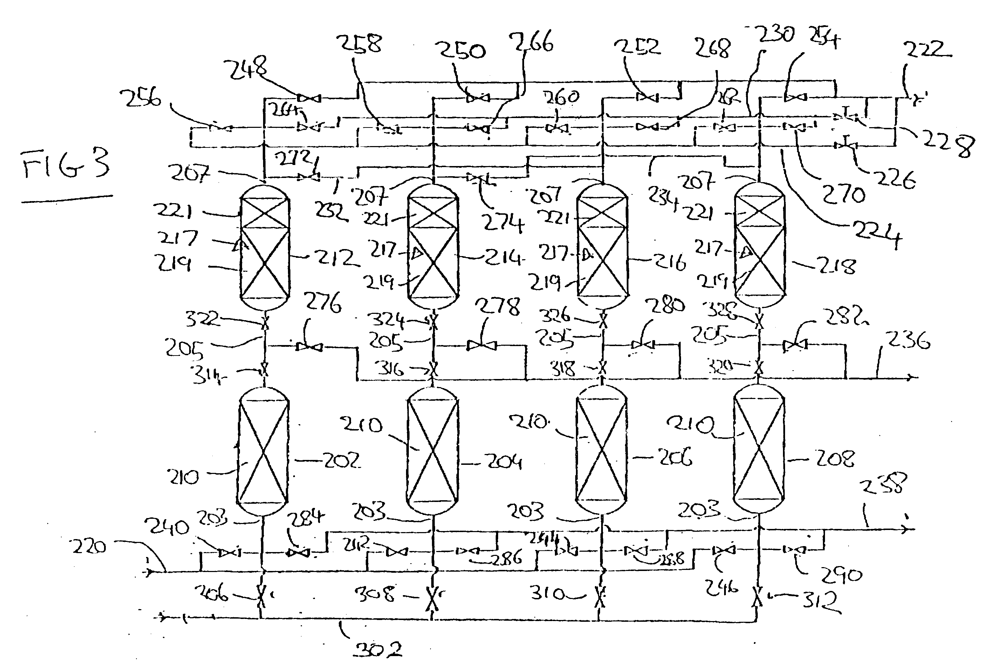

The resulting gas mixture typically comprising 50 to 80 mole per cent of hydrogen; 8 to 20 mole per cent of carbon monoxide; 10 to 30 mole per cent of carbon dioxide; and up to 3 mole per cent of methane, is subjected to sorptive separation to produce a hydrogen product, a gas mixture enriched in carbon dioxide, and a gas mixture enriched in carbon monoxide. The separation is preferably carried out be pressure swing adsorption (PSA). The mixed gases enter a pressure swing adsorption (PSA) separation plant 122 through an inlet 120. The PSA separator 122 comprises a first array 124 of adsorber vessels in series with a second array 126 of adsorber vessels. The PSA separator 122 has an outlet 128 for hydrogen product, an outlet 130 intermediate of the array of beds 124 and the array of beds 126 for gas mixture enriched in carbon monoxide and an outlet 132 for gas mixture enriched in carbon dioxide. The adsorbent in both beds preferentially adsorbs in the order, carbon dioxide, carbon monoxide and hydrogen. Suitable plants for use as the plant 122 and their operation are to be described below with reference to Figures 2 and 3.

The outlet 132 communicates with a device 134, which may be a simple T-junction, for dividing the carbon dioxide-enriched gas mixture into two streams. A first stream passes to a tank 136 while the other stream passes to a mixer 138 (which may, if desired, be a simple union of pipes) in which it is mixed with another carbon dioxide-rich gas stream from a downstream part of the plant shown in Figure 1. The resulting mixture then enters a gas storage tank 160 through an inlet 158. It is this gas storage tank 160 that is used as the source of the recycled fuel introduced into the reformer 102 through the inlet 112. The carbon dioxide-rich gas stream also containing a significant proportion of hydrogen and some carbon monoxide, such that it is readily combustible.

The carbon dioxide-enriched gas mixture that is collected in the storage tank 136 is passed continuously out of that tank through an outlet 170 to a compressor 172 that raises the stream to the operating pressure of the reformer 102 and then introduces it thereto through the inlet 108. Thus, the carbon dioxide-enriched gas mixture from the PSA separator also provides the source of the recycled gas introduced into the reformer 102 for reaction with the hydrocarbon.

The gas mixture enriched in carbon monoxide that exits the PSA plant 122 through the outlet 130 is collected in a storage tank 140 which is employed to continuously pass gas mixture enriched in carbon monoxide to the compressor 142 to raise the pressure thereof preferably to about one atmosphere in excess of the pressure of the gas entering the PSA plant 122 through the inlet 120. The compressed gas mixture enriched in carbon monoxide then passes to a PSA separation plant 148 comprising a first stage 150 and a second stage 152. In the first stage 150, constituents of the gas mixture more readily adsorbable than carbon monoxide are adsorbed to produce a gas mixture consisting essentially of hydrogen and carbon monoxide which passes out through conduit 154 into the second stage 152 for further separation. The adsorbed gases are desorbed and vented from the first stage 150 through an outlet 156 and are then mixed in the mixing device 138 as aforesaid, with a part of the carbon dioxide - enriched gas mixture from the PSA plant 122.

In the second stage 152 of the PSA plant 148, carbon monoxide is adsorbed from the gas mixture to produce a gas mixture rich in hydrogen. A part of this gas passed out of the plant 148 through outlet 168 and forms the hydrogen-rich gas which is, preferably, mixed with the reformed gas mixture in mixing device 118. Another part of the hydrogen-rich gas is returned through conduit 166 to the first stage 150 of the plant 148 where it helps to purge desorbed gases from the adsorbent. In order to produce a relatively pure carbon monoxide product carbon monoxide adsorbed by the adsorbent in second stage 152 is preferably desorbed therefrom by being subjected to sub-atmospheric pressure, e.g. by a vacuum pump (not shown in Figure 1) and is withdrawn from the plant 148 through the outlet 164. Typically, the carbon monoxide product contains less than 200 volumes per million of methane, less than 10 volumes per million of carbon dioxide and less than 1500 volumes per million of hydrogen.

A plant as shown in Figure 1 is capable of producing carbon monoxide in relatively high yield in comparison with known non-cryogenic processes. This is mainly as a result of employing the PSA plant 122 to produce three different fractions, namely hydrogen product , a carbon monoxide-enriched gas mixture and a carbon-dioxide enriched gas mixture. Any desired carbon monoxide product purity can be achieved in accordance with the subject process. There is, however, a trade-off between the specified purity and the resulting yield of carbon monoxide.

One embodiment of a PSA plant suitable for separating hydrogen, a gas mixture enriched in carbon monoxide and a gas mixture enriched in carbon dioxide from the gas mixture issuing from a reformer 102 is shown in Figure 2 of the accompanying drawings.

As shown in Figure 2, four adsorber vessels 202, 204, 206 and 208 of equal volume are connected in parallel to a feed gas inlet pipeline 220 which is intended for connection to the conduit 120 shown in Figure 1. Each vessel contains a bed 210 of activated carbon adsorbent and has at its bottom, a gas port 203 able to be selectively placed in communication with the feed pipeline 220 and with a vent gas pipeline 238 for the withdrawal of carbon-dioxide enriched gas mixture and at its top a respective connecting conduit 205. The connecting conduits 205 provide through paths from the tops of the vessels to, respectively, the bottoms of adsorbent vessels 212, 214, 216 and 218. Each of the latter adsorber vessels contains a bed 217 of adsorbent comprising a lower layer 219 of activated carbon adsorbent and an upper layer 221 of zeolite molecular sieve adsorbent. Each of said vessels has at its top a gas port 207 able to be placed selectively in communication with a hydrogen product pipeline 222, a purge gas pipeline 224 having a purge gas flow control valve 226 disposed therein, and a repressurisation gas pipeline 230 having a flow control valve 228 disposed therein. The purge gas and repressurisation pipelines both communicate with the hydrogen product pipeline 222 to enable the adsorber vessels to be respectively purified and repressurised with product hydrogen. In addition, the tops of the vessels 212 and 216 are interconnected by the pressure equalisation conduit 232, and the tops of the vessels 214 and 218 are similarly interconnected by a pressure equalisation conduit 234. The PSA plant shown in Figure 2 also includes an outlet pipeline 236 for carbon monoxide-enriched gas mixture which is connected to the conduits 205.

The flow paths taken by gas in operation of the plant shown in Figure 2 are determined by the positions of a number of stop valves. Thus, there are four stop valves 240, 242, 244 and 246 whose positions determine which of the vessels 202, 204, 206 and 208 is placed in communication with the feed pipeline 220; four stop valves 248, 250, 252 and 254 whose positions determine which of the vessels 212, 214, 216 and 218 supplies product gas to the hydrogen product pipeline 222; purge gas valves 256, 258, 260 and 262 to select which of the vessels 212, 214, 216 and 218 receives purge gas comprising product hydrogen; stop valves 264, 266, 268 and 270 which determine which of the vessels 212, 214, 216 and 218 is repressurised with hydrogen product gas from the pipeline 228. There are also stop valves 272 and 274 which determine whether the members of the respective pairs of vessels 212 and 216, and 214 and 218, are placed in communication with one another so as to equalise the gas pressures therebetween. Further, there are stop valves 276, 278, 280 and 282 whose positions determine which of the vessels supplys carbon monoxide-enriched gas mixture to the pipeline 236 and stop valves 284, 286, 288 and 290 which determine which of the vessels supplys carbon dioxide-enriched gas mixture to the pipeline 238.

As is well known in the art of pressure swing adsorption, all the stop valves may be controlled automatically on a predetermined schedule. Each of the pairs of vessels 202 and 212, 204 and 214, 206 and 216, and 208 and 218 is used to separate the reformed gas mixture in accordance with a cycle of operation which is now described with reference to the vessels 202 and 212. In the first step of the cycle, a gas mixture typically comprising 50 - 80% by volume of hydrogen, 8 -20% by volume of carbon monoxide, 0 - 3% by volume of methane, 10 - 30% by volume of carbon dioxide and saturated in water vapour is passed into the vessel 202 at a pressure typically in the range of 125 - 400 psig. Carbon dioxide and water vapour are strongly adsorbed on the activated carbon adsorbent in the bed 210 than carbon monoxide and methane. Thus, as the gas mixture flows through the adsorbent bed, it becomes progressively enriched in hydrogen. The gas mixture then flows into the vessel 212 and further adsorption takes place in the layer of activated carbon 217. By the time gas enters the upper layer of zeolite 221, it is predominantly hydrogen. The zeolite removes all but minute traces of the other gases to form hydrogen gas substantially free of all impurities. In particular, the zeolite removes any carbon dioxide that passes through the bed 210 and the lower layer 219 of the bed 217 as well as other gases so that the product hydrogen contains less than one volume per million of carbon monoxide and no measurable trace of any other impurity. The hydrogen product is withdrawn from the upper vessel 212 throughout the period in which the feed gas is introduced therein. This feed and production of hydrogen continues until there is about to occur a "break-out" of impurities from the adsorbent which would otherwise contaminate the hydrogen product. In a typical cycle, this feed and production lasts for from about two to six minutes.

In the next step of the process, the feed of gas to the vessel 202 through the port 203 and the withdrawal of hydrogen product through the port 207 are stopped and the top of the vessel 212 is placed in communication with the top of the vessel 216 which has previously been purged with product hydrogen. This reduces the pressure in vessels 210 and 212 while vessels 206 and 216 are pressurised with hydrogen gas of near product purity. As the gas flows out of the vessel 212, the pressure in vessels 210 and 212 falls and carbon monoxide tends to be desorbed from the adsorbent in preference to methane, carbon dioxide and water vapour. This step of the cycle typically lasts between about twenty and forty seconds and is ended by stopping communication between the tops of vessels 212 and 216.

The next step of the cycle is to withdraw carbon monoxide-enriched gas mixture from the beds 210 and 217 in the vessels 202 and 212 via the connecting conduit 205. Since in the previous step carbon monoxide has been desorbed from the absorbent, the gas mixture in the void spaces of the beds 210 and 217 in the vessels 202 and 212 has been enriched in carbon monoxide and now this gas mixture is withdrawn through the product pipeline 236. Withdrawal of the product causes the pressure in the vessels 202 and 212 to fall with further desorption of carbon monoxide. The arrangement of the plant shown in Figure 2 which enables carbon monoxide-enriched gas mixture to be withdrawn from the conduit 205 is particularly advantageous. If the carbon monoxide-enriched gas mixture were to be withdrawn from the top of the vessel 212, small amounts of carbon monoxide retained in the layer 221 in the bed 217 would contaminate the product in a subsequent hydrogen production step. Further, during withdrawal of the carbon monoxide-enriched gas mixture, carbon dioxide may reach and be adsorbed in the zeolite layer 221. Since complete desorption of the carbon dioxide from the molecular sieve requires a high flow rate of purge gas, carbon dioxide build-up may occur. This can adversely affect product purity and the efficient operation of the process cycle. Typically, the production of the carbon monoxide-enriched gas mixture continues for about two minutes and is stopped prior to a significant break out of carbon dioxide from the adsorbent in the vessels 202 and 212. The resulting carbon monoxide-enriched mixture, which is produced at a pressure of between about 10 and 40 psig, generally contains at least about 20% by volume of carbon monoxide, the balance being mainly hydrogen with up to about 2% of methane and carbon dioxide.

The production of carbon monoxide-enriched gas mixture is stopped by ending communication between the pipeline 236 and the conduit 205 connecting the vessels 202 and 212. The next step of the cycle is to withdraw carbon dioxide-enriched gas mixture through port 203 at the bottom of the bed 210 in the vessel 202 and take it for further processing through the pipeline 238. The flow of carbon dioxide enriched gas mixture is countercurrent to the flow of the feed gas mixture in the hydrogen production step. The carbon dioxide enriched gas mixture is typically produced at a pressure of about 5 psig. The reduction in pressure during this step and the hydrogen product purge during the subsequent step is effective to cause desorption of carbon dioxide from the adsorbents. Generally, the withdrawal of the carbon dioxide-enriched gas mixture is continued for the period of for about 1 - 2 minutes (typically about 80 seconds). After depressurisation, additional withdrawal of the carbon dioxide-enriched gas mixture is performed by opening the port 207 of the vessel 212 to the hydrogen purge pipeline 224. The bed 217 is thus purged typically for about four minuts by a flow of hydrogen countercurrent to the direction in which the hydrogen is produced. The hydrogen purge gas tends to sweep out impurities from the void spaces in the bed 217 through the bed 210 in the vessel 202 into the pipeline 238. This gas mixture generally contains at least 50% by volume of carbon dioxide and less than 10% by volume of carbon monoxide, with the balance being mostly hydrogen with a small amount of methane and a trace amount of water vapour.

The next steps of the cycle are performed so as to prepare the beds 210 and 217 for further hydrogen production in the next cycle by building up the pressure and concentration of hydrogen in the void spaces of the beds 210 and 217. A further build up of pressure is then effected by ending communication between the purge gas pipeline 224 and the vessel 212 and placing the top of the vessel 216 in communication with the top of the vessel 212 through the pressure equalisation conduit 232, the vessel 216 having just completed its hydrogen production step while stopping communication between the port 203 of the vessel 202 and the pipeline 238. There is a flow of hydrogen from the vessel 216 to the vessel 212. This step may be continued for a period of time in the range of 30 - 60 seconds (typically about 40 seconds). Communication between the vessels 212 and 216 is then ended and the vessels 212 and 202 are brought up to pressure by placing the top of the vessel 212 in communication with the product repressurisation pipeline 230. During this step, there is a back flow of hydrogen product into the vessels 212 and 202. The product repressurisation may be carried out for a period of from 3 - 4 minutes (typically 200 seconds) and then stopped by ending communication between the pipeline 230 and the port 207 of the vessel 212. The vessels 202 and 212 are then ready to perform the next cycle which is the same as the one described above.

Each pair of adsorber vessels 202 and 212, 204 and 214, 206 and 216, and 208 and 218 is used to perform the above-described cycle in predetermined phase relationship with the cycles performed using the other pairs of vessels. The respective phasing of the cycles and the positions of the stop valves required to effect switching from step to step is shown in Tables 1 and 2 below:

8

TABLE 1 - CYCLE PHASING

| Step | Vessels 202 and 212 | Vessels 204 and 214 | Vessels 206 and 216 | Vessels 208 and 218 |
|---|---|---|---|---|
| 1 | Feed/$H_2$ production | Bed pressure equalisation | Product purge/ $CO_2$ enriched gas mixture production | Bed pressure equalisation |
| 2 | Feed/$H_2$ production | Product repressurisation | Product purge/ $CO_2$ enriched gas mixture production | CO enriched gas mixture |
| 3 | Feed/$H_2$ production | Product repressurisation | Product purge $CO_2$ enriched gas mixture production | $CO_2$ enriched gas mixture production by depressurisation. |
| 4 | Bed pressure equalisation | Feed/$H_2$ production | Bed pressure equalisation | Product purge $CO_2$ enriched gas mixture production. |
| 5 | CO enriched gas mixture production | Feed/$H_2$ production | Product repressurisation | Product purge $CO_2$ enriched gas mixture production. |
| 6 | $CO_2$ enriched gas mixture production by depressurisation | Feed/$H_2$ production | Product repressurisation | Product purge $CO_2$ enriched gas mixture production. |
| 7 | Product purge/$CO_2$ enriched gas mixture production | Bed pressure | Feed/$H_2$ production | Bed pressure equalisation |

EP 0 317 235 B1

EP 0 317 235 B1

TABLE 1 - CYCLE PHASING

| Step | Vessels 202 and 212 | Vessels 204 and 214 | Vessels 206 and 216 | Vessels 208 and 218 |
|---|---|---|---|---|
| 8 | Product purge | CO enriched gas mixture production | Feed/$H_2$ production | Product repressurisation |
| 9 | Product purge/ $CO_2$ enriched gas mixture production | $CO_2$ enriched gas mixture production by depressurisation | Feed/$H_2$ production | Product repressurisation |
| 10 | Bed pressure equalisation | Product purge/ $CO_2$ enriched gas mixture production. | Bed pressure equalisation | Feed/$H_2$ production |
| 11 | Product repressurisation | Product purge/ $CO_2$ enriched gas mixture production. | CO enriched gas mixture production | Feed/$H_2$ production |
| 12 | Product repressurisation | Product purge/ $CO_2$ enriched gas mixture production. | $CO_2$ enriched gas mixture production by depressurisation | Feed/$H_2$ production |

TABLE 2

| STOP VALVE OPERATION CHART | | |
|---|---|---|
| Stop | Time/secs | Stop Valves open * |
| 1 | 40 | 240, 248, 274, 260, 288 |
| 2 | 120 | 240, 248, 266, 260, 282, 288 |
| 3 | 80 | 240, 248, 260, 266, 288, 290 |
| 4 | 40 | 272, 242, 250, 262, 290 |
| 5 | 120 | 276, 242, 250, 268, 262, 290 |
| 6 | 80 | 284, 242, 250, 268, 262, 290 |
| 7 | 40 | 256, 274, 244, 252, 284 |
| 8 | 120 | 256, 278, 244, 252, 270, 284 |
| 9 | 80 | 256, 286, 244, 252, 270, 284 |
| 10 | 40 | 272, 258, 246, 254, 286 |
| 11 | 120 | 264, 258, 280, 246, 254, 286 |
| 12 | 80 | 264, 258, 288, 246, 254, 286 |

\* Those stop valves not listed are closed.

In Figure 3 there is illustrated a modification to the apparatus shown in Figure 2. Parts that are the same in both Figures are identified by the same reference numerals and will not be described again. The apparatus shown in Figure 3 is intended to perform similar cycles to the ones performed by the apparatus shown in Figure 2 with the exception of the carbon monoxide enriched gas mixture production step which is divided into parts (a) and (b). With reference to the vessels 202 and 212, in part (a), the carbon monoxide enriched gas mixture is only withdrawn from the upper vessel 212, whereas in part (b) it is only withdrawn from the vessel 202. Moreover, in part (a) the bed 210 in the vessel 202 is swept from its bottom with a portion of the carbon-dioxide enriched gas mixture produced in operation of the plant and compressed in the vent gas compressor 172 shown in Figure 1 to a suitable pressure (e.g. 260 psia). The effect of the sweep gas is to increase the recovery of carbon monoxide in the carbon monoxide enriched gas mixture. The sweep gas displaces carbon monoxide from the bottom of the bed 210 in the vessel 202 towards the top of the bed which enhances carbon monoxide production. In order to carry out this modification additional valves and pipelines are provided in the plant shown in Figure 3. Thus the conduit 205 connecting the vessels 202 and 212 has stop valves 314 and 322 so disposed therein that the pipeline 236 terminates in the conduit 205 at a location intermediate the valves 314 and 322. A pipeline 302, connected to the discharge of compressor 172 shown in Figure 1, is provided for supplying the sweep gas. A stop valve 306, when open, permits the flow of gas from the pipeline 302 into the bottom of the vessel 202 through the port 203.

The pairs of vessels 204 and 214, 206 and 216, and 208 and 218 have, respectively, stop valves 316 and 324, 318 and 326, 320 and 328 disposed in their connecting conduits 205 corresponding to the stop valves 314 and 322. In addition, the vessels 204, 206 and 208 have associated therewith stop valves 308, 310 and 312, respectively, corresponding to the stop valve 306 associated with the port 203 of the vessel 202.

Typically, parts (a) and (b) of the carbon monoxide enriched gas mixture production step have durations in the order of 40 seconds and 80 seconds respectively. The respective phasing of the cycles performed using each pair of adsorbent vessels and the positions of the stop valves required to effect switching from step to step are shown in Tables 3 and 4 below.

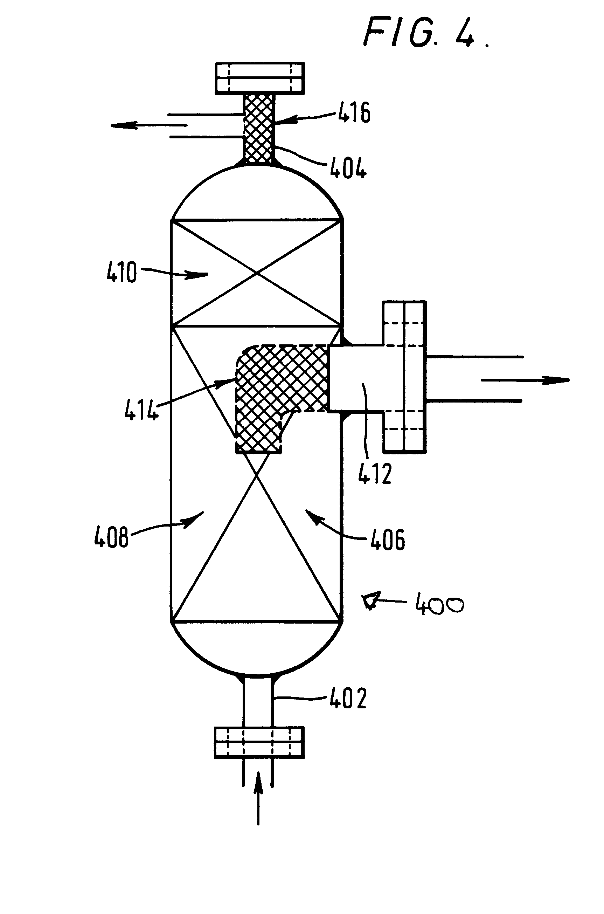

Referring again to the apparatus shown in Figure 2, it is possible to substitute for each pair of adsorbent vessels 202 and 212, 204 and 214, 206 and 216, and 208 and 218, a single adsorber vessel of the kind shown in Figure 4. The vessel 400 shown in Figure 4 is generally columnar in shape and has a port 402 at its bottom and a port 404 at its top. The vessel contains a bed 406 of adsorbent comprising a lower layer 408 of activated carbon and an upper layer 410 of zeolite molecular sieve. In addition to the ports 402 and 404, there is a port 412 in the side of the vessel which communicates with the interior of the layer 408 by means of a generally L-shaped tubular member 414 formed of fine mesh. There is a similar fine mesh member 416 disposed in the port 404. In operation, the feed gas mixture is passed into and carbon dioxide-enriched gas mixture withdrawn from the vessel 400 through the port 402, hydrogen product is withdrawn through the port 404 and carbon-monoxide enriched gas mixture is withdrawn through the port 412. It can be appreciated that the side port 412 communicating with the activated carbon layer 408 makes it possible to withdraw the carbon-monoxide enriched gas mixture from a location intermediate the withdrawal points of the hydrogen product and the carbon dioxide enriched gas mixture without the need to employ two separate adsorbent vessels. However, it is not possible to use such adsorbent vessels 400 in the apparatus shown in Figure 3 since it is not possible to isolate that part of the bed 406 below the tubular member 414 from the part thereabove.

TABLE 3 – CYCLE PHASING

| Step | Vessels 202 and 212 | Vessels 204 and 214 | Vessels 206 and 216 | Vessels 208 and 218 |
|---|---|---|---|---|
| 1 | Feed/$H_2$ production | Bed pressure equalisation | Product purge/$CO_2$ enriched gas mixture production | Bed pressure equalisation |
| 2(a) | Feed/$H_2$ production | Product repressurisation | Product purge/$CO_2$ enriched gas mixture production | CO enriched gas mixture production from vessel 218/sweep vessel 208 with $CO_2$ enriched gas mixture |
| 2(b) | Feed/$H_2$ production | Product repressurisation | Product purge/$CO_2$ enriched gas mixture production | CO enriched gas mixture production from vessel 208 |
| 3 | Feed/$H_2$ production | Product repressurisation | Product purge/$CO_2$ enriched gas mixture production | $CO_2$ enriched gas mixture production |
| 4 | Bed pressure equalisation | Feed/$H_2$ production | Bed pressure equalisation | Product purge/$CO_2$ enriched gas mixture production |

12

| | | | | |
|---|---|---|---|---|
| 5(a) | CO enriched gas mixture production from vessel 212/sweep vessel 202 with $CO_2$ enriched gas mixture | Feed/$H_2$ production | Product repressurisation | Product purge/$CO_2$ enriched gas mixture production |
| 5(b) | CO enriched gas mixture production from vessel 202 | Feed/$H_2$ production | Product repressurisation | Product purge/$CO_2$ enriched gas mixture production |
| 6 | $CO_2$ enriched gas mixture production | Feed/$H_2$ production | Product repressurisation | Product purge/$CO_2$ enriched gas mixture production |
| 7 | Product purge/$CO_2$ enriched gas mixture production | Bed pressure equalisation | Feed/$H_2$ production | Bed pressure equalisation |
| 8(a) | Product purge/$CO_2$ enriched gas mixture production | CO enriched gas mixture production from vessel 214/sweep vessel 204 with $CO_2$ enriched gas mixture | Feed/$H_2$ production | Product repressurisation |

| | | | |
|---|---|---|---|
| 8(b) | Product purge/$CO_2$ enriched gas mixture production | CO enriched gas mixture product from vessel 204 | Feed/$H_2$ production | Product repressurisation |
| 9 | Product purge/$CO_2$ enriched gas mixture production | $CO_2$ enriched gas mixture production | Feed/$H_2$ production | Product repressurisation |
| 10 | Bed pressure equalisation | Product purge/$CO_2$ enriched gas mixture production | Bed pressure equalisation | Feed/$H_2$ production |
| 12(a) | Product repressurisation | Product purge/$CO_2$ enriched gas mixture production | CO enriched gas mixture production from vessel 216/sweep vessel 206 from $CO_2$ enriched gas mixture | Feed/$H_2$ production |
| 12(b) | Product repressurisation | Product purge/$CO_2$ enriched gas mixture production | CO enriched gas mixture production from vessel 206 | Feed/$H_2$ production |
| 13 | Product repressurisation | Product purge/$CO_2$ enriched gas mixture production | $CO_2$ enriched gas mixture production | Feed/$H_2$ production |

TABLE 4

| STOP VALVE OPERATION CHART | | |
|---|---|---|
| Stop | Time/secs | Stop Valves open * |
| 1 | 40 | 240,248,274,260,288,314,316,318,320,322,324,326,328 |
| 2(a) | 40 | 240,248,266,260,282,288,312,314,316,318,322,324,326,328 |
| 2(b) | 80 | 240,248,266,260,282,288,314,316,318,320,322,324,326 |
| 3 | 80 | 240,248,266,260,288,284,290,314,316,318,320,322,324,326,3 |
| 4 | 40 | 272,242,250,262,290,314,316,318,320,322,324,326,328 |
| 5(a) | 40 | 276,242,250,268,262,290,306,316,318,320,322,324,326,328 |
| 5(b) | 80 | 276,242,250,268,262,290,314,316,318,320,324,326,328 |
| 6 | 80 | 284,242,250,268,262,290,314,316,318,320,322,324,326,328 |
| 7 | 40 | 256,284,274,244,252,314,316,318,320,322,324,326,328 |
| 8(a) | 40 | 256,284,278,244,252,270,308,314,318,320,322,324,326,328 |
| 8(b) | 80 | 256,284,278,244,252,270,314,316,318,320,322,326,328 |
| 9 | 80 | 256,284,286,244,252,270,314,316,318,320,322,324,326,328 |
| 10 | 40 | 272,258,286,246,254,314,316,318,320,322,324,326,328 |
| 11(a) | 40 | 264,258,286,280,246,254,310,314,316,320,322,324,326,328 |
| 11(b) | 80 | 264,258,286,280,246,254,314,316,318,320,322,324,328 |
| 12 | 80 | 264,258,286,288,246,254,314,316,318,320,322,324,326,328 |

* Those stop valves not listed are closed.

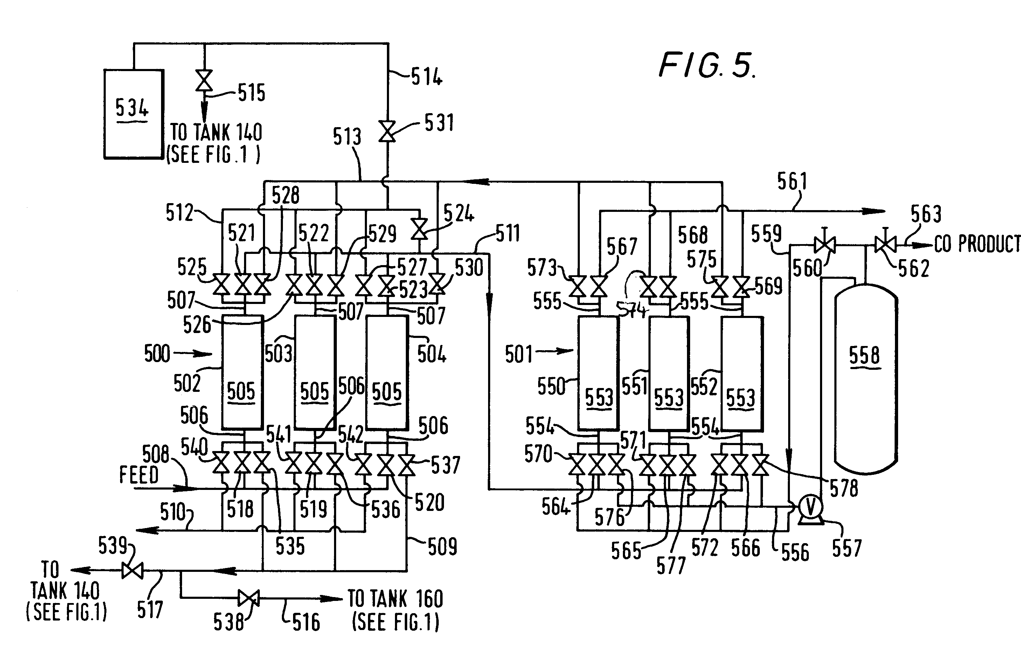

Referring now to Figure 5, there is shown a two stage PSA plant suitable for use as the PSA unit 148 in Figure 1. The first stage 500 includes three generally identical adsorber vessels 502, 503 and 504, arranged in parallel, each containing a bed 505 of suitable adsorbent, typically activated carbon effective, to adsorb carbon dioxide and methane impurities from the carbon monoxide-enriched gas mixture. Each adsorber vessel has a gas flow port 506 at the bottom and a gas flow port 507 at the top. The gas flow ports 506 communicate with a feed gas pipeline 508 which extends from the storage tank 140, shown in Figure 1, a gas recovery pipeline 509 and a vent pipeline 510. The gas recovery pipeline 509 terminates in a union with a waste gas pipeline 516 which itself terminates in an inlet to the waste gas tank 160 (not shown in Figure 5) and a recycle pipeline 517 which terminates in an inlet to the carbon monoxide-enriched gas mixture tank 140 (not shown in Figure 5). The vessels 502, 503 and 504 communicate through their ports 507 with a pipeline 511 for conducting a mixture consisting essentially of carbon monoxide and hydrogen to the second stage 501 of the PSA separator, a first purge gas pipeline 512 for in turn purging and repressurising each bed 505 with the mixture of carbon monoxide and hydrogen produced by the first stage 500, and a second purge gas pipeline 513 for purging the beds 505 with gas from the second stage 501. The first stage 500 also has a pressure equalisation pipeline 514 extending from an intermediate location in the first purge gas pipeline 512 to a tank 534. The tank 534 also communicates with a pipeline 515 which returns gas to the feed gas tank 140 (not shown in Figure 5).

The first stage of the apparatus shown in Figure 5 is also provided with stop valves operable to select during each cycle of operation which vessel communicates with each of the respective pipelines. Accordingly, stop valves 518, 519 and 520 operate to determine which of the vessels 502, 503, 504 communicates with the feed gas pipeline 508 through the respective port 506. Stop valves 520, 521 and 522 operate to supply a purified gas mixture essentially free of carbon dioxide and methane from the vessels 502, 503 and 504 through their respective ports 507 to the pipeline 511 which serves as the inlet to the second stage 501 of the apparatus. The first purge gas pipeline 512 has a stop valve 524 disposed in it which, when open, enables a part of the gas from the pipeline 511 to be used in turn as purge gas and repressurisation gas for the vessels 502, 503 and 504. The vessels 502, 503 and 504 have respectively stop valves 525, 526 and 527 which operate to place the vessels in communication with a purified gas mixture of carbon monoxide and hydrogen through their respective ports 507. Similarly, stop valves 528, 529 and 530, associated respectively with vessels 502, 503 and 504, when open, allow gas purged from the second stage 501 of the plant to flow from the pipeline 513 into the respective vessel through its port 507. The pressure equalisation pipeline 514 also has a stop valve 531 disposed therein, and the outlet from the equalisation tank 534 has a stop valve 532 disposed therein. There are two main paths for the discharge of gas from the bottom of the vessels 502, 503 and 504. The first path is via the recovery gas pipeline 509. The vessels 502, 503 and 504 have respectively stop valves 535, 536 and 537 which, when open, allow gas to be discharged to the pipeline 509 through the port 506 of the respective vessel. In addition, stop valves 538 and 539 in the pipelines 516 and 517, respectively, determine whether the gas flowing through the pipeline 509 is returned to the tanks 140 or 160 (shown in Figure 1). The second path for the discharge of gas from the bottom of the vessels 502, 503, 504 is via the pipeline 510. Stop valves 540, 541 and 542 are associated with the respective ports 506 of the vessels 502, 503, 504 and, when open, permit gas to flow from the respective vessel to the pipeline 510 into the tank 160, or for discharge from the plant through its stack (not shown) All the stop valves described above with reference to the first stage 500 of the plant shown in Figure 5 may be operated automatically in conformity with a predetermined cycle which will now be desribed with respect to the adsorbent bed in the vessel 502.

Compressed carbon monoxide enriched gas mixture typically comprising from about 55 to 80% by volume of hydrogen, from about 15 to 40% by volume of carbon monoxide with lesser quantities of carbon dioxide, methane and water vapour is fed into the vessel 502 through its port 506. The activated carbon adsorbent contained therein adsorbs water vapour, carbon dioxide and methane in preference to carbon monoxide and hydrogen. The resulting mixture of hydrogen and carbon monoxide passes out of the vessel 502 through its port 507 into the pipeline 511 and is fed to the second stage 501 of the plant whose operation to separate the carbon monoxide from the hydrogen. Before the adsorbent bed 505 becomes saturated with impurities to the extent that break out would occur, the feeding of the gas mixture to the vessel 502 is stopped. Typically, the admission of feed gas to the vessel 502 can be tolerated for a period of 3 to 4 minutes before such break out of impurities is likely to occur. The next steps of the cycle involves recovering unadsorbed gas from the vessel 502. First, upon ending the previously described feed step, the top of the vessel 502 is placed in communication with the equalisation tank 534 so that a gas mixture comprising carbon monoxide and hydrogen and only traces of impurity is passed to the equalisation tank 534 from the top of the vessel 502. Typically, this step lasts only a few seconds, e.g. from 10 to 20 seconds. Next, unadsorbed gas from the bottom of the vessel 502 is passed via the pipelines 509 and 516 to the waste gas tank 160 (see Figure 1). Typically, the gas mixture so discharged from the vessel 502 is richer in carbon dioxide and methane than the feed gas mixture as the carbon dioxide in particular tends to concentrate at the bottom of the bed 505. However, once the gas from the very bottom of the bed has been vented, typically requiring under 10 seconds, a gas mixture from the vessel can be recycled to the feed tank 140 (see Figure 1). Accordingly, communication between the bottom of the vessel 502 and the pipeline 516 is stopped after a period of less than 10 seconds and the port 506 of the vessel 502 is then placed in communication with the pipeline 517 to enable the gas mixture to be recycled to the tank 140. During the recycle step, the pressure of the bed 505 in the vessel 502 gradually falls until it reaches a minimum typically from about 5 to 10 psig. As the pressure falls, the more strongly adsorbed impurities, namely methane, water vapour and carbon dioxide are desorbed.

The next steps of the process involve employing purge gas to flush out impurities from the bed. In a first purge gas step a part of the purified gas mixture of carbon monoxide and hydrogen is taken from the vessel 503 and introduced into the top of the vessel 502. It passes counter currently to the direction of the feed gas flow through the bed and flows from the bottom of the vessel 502 into the vent gas pipeline 510 from which it may preferably be passed to the tank 160 (see Figure 1) for use as fuel or vented from the plant. This first purge step typically lasts in the order of a minute. To end the first purge step, communication between the port 507 of the vessel 502 and the pipeline 512 is ended, as is communication between the port 506 of the vessel 502 and the pipeline 510. During the first purge step the amount of impurities present in the vessel 502 is considerably reduced and in subsequent purge steps it becomes possible to recover the gas passing out of the port 506 of the vessel 502. In the next purge step, purge gas comprising a mixture of hydrogen and carbon monoxide from the second stage 501 of the plant shown in Figure 5 is passed from pipeline 512 into the top of the vessel 502 through its port 507 and flows downwardly therethrough exiting the vessel 502 through the port 506 and passing to the tank 160 (see Figure 1). During this purge step further impurities are swept out of the vessel 502 and thus the impurity level of the exiting gas mixture tends to fall. This purge step typically has a duration of the order of 10 to 20 seconds and is ended by ending communication between the pipelines 509 and 516. Thereupon the pipeline 509 is placed in communication with the pipeline 517 leading to the carbon monoxide enriched gas mixture tank 140 (see Figure 1) so that the gas leaving the bottom of the vessel 502 now flows to the tank 140. This flow of gas may typically continue for a period of time of from 1 to 2 minutes. At the end of this step communication between the bottom of the vessel 502 and the pipelines 509 and 517 is discontinued.

The next steps of the cycle concern charging the vessel 502 with the gas mixture comprising hydrogen and carbon monoxide ready for the feed step of the next cycle. Accordingly, to perform these pressurisation steps, the port 506 in the bottom of vessel 502 is closed to all the pipelines associated therewith and the purge gas from the pipeline 513 is allowed to flow into the vessel 502 through its port 507. The vessel 502 is thereby pressurised to the available pressure of the second stage purge gas. Typically, this repressurisation step lasts from about 1 minute to 2 minutes. The next step of the cycle involves repressurisation of the vessel 502 with gas from the equalisation tank 534. Typically, it takes only a few seconds, e.g. from 10 to 20 seconds, for the pressure in the tank 534 to equalise the pressure in the vessel 502. At this stage, communication between the vessel 502 and the equalisation tank 534 is stopped. The final step of the cycle is then performed. This involves placing the first purge gas pipeline 512 in communication with the vessel 502 through its port 507 and passing part of the impurity free gas mixture comprising carbon monoxide and hydrogen being produced simultaneously in the vessel 504 into the vessel 502 through its port 507. Thus, the vessel 502 is ready to produce impurity free mixture of carbon monoxide and hydrogen at the required pressure at the start of the next cycle. Simultaneously with performing this step the equalisation tank 534 is placed in communication with the tank 140, containing carbon monoxide-enriched gas mixture so as to recover further gas from the equalisation tank 534. This step requires from 60 to 90 seconds after which the vessel 502 is then ready to be used in the next cycle.

It is to be appreciated that while the above described cycle of operations is being performed using the vessel 502, identical cycles are being performed using the vessels 503 and 504 in appropriate phase relation to one another. The relationship between these cycles is illustrated in Table 5 which sets out all the steps of each cycle in the order in which they are performed and the duration of each step. In Table 6, below, there is set out a list of which valves are open during the respective steps of the cycle.

TABLE 5

| Step No: | Duration (secs) | Vessel 502 | Vessel 503 | Vessel 504 |
|---|---|---|---|---|
| 1 | 12 | Feed/Production of purified $CO-H_2$ mixture | Repressurise via second purge pipeline 513 to atmosphere | Depressurise to equalisation tank 534 |
| 2 | 6 | Feed/Production of purified $CO-H_2$ mixture | Repressurise via second purge pipeline 513 | Depressurise to waste tank 160 |
| 3 | 34 | Feed/Production of purified $CO-H_2$ mixture | Repressurise via second purge pipeline 513 | Depressurise to feed tank 140 |
| 4 | 60 | Feed/Production of purified $CO-H_2$ mixture | Repressurise via second purge pipeline 513 | Purge from first purge pipeline 512 to atmosphere |
| 5 | 14 | Feed/Production of purified $CO-H_2$ mixture | Repressurise from equalisation tank 534 | Purge from second purge pipeline 513 to waste tank 160 |
| 6 | 12 | Feed/Production of purified $CO-H_2$ mixture | Repressurise from equalisation tank 534. | Purge from second purge pipeline 513 to feed tank 140 |

EP 0 317 235 B1

| Step No: | Duration (secs) | Vessel 501 | Vessel 502 | Vessel 503 |
|---|---|---|---|---|
| 7 | 72 | Feed/Production of purified $CO-H_2$ mixture | Repressurise with first stage product and pass gas from equalisation tank 534 to feed tank 140 | Purge from second purge pipeline 513 to feed tank 140 |
| 8 | 12 | Depressurise to equalisation tank 534 | Feed/Production of purified $CO-H_2$ mixture | Repressurise via second purge pipeline 513 |
| 9 | 6 | Depressurise to waste tank 160 | Feed/Production of purified $CO-H_2$ mixture | Repressurise via second purge pipeline 513 |
| 10 | 34 | Depressurise to feed tank 140 | Feed/production of purified $CO-H_2$ mixture | Repressurise via second purge pipeline 513 |
| 11 | 60 | Purge from first purge pipeline 512 to atmosphere | Feed/Production of purified $CO-H_2$ mixture | Repressurise via second purge pipeline 513 |
| 12 | 14 | Purge from second purge pipeline 513 to waste tank 160 | Feed/Production of purified $CO-H_2$ mixture | Repressurise from equalisation tank 534 |
| 13 | 12 | Purge from second purge pipeline to feed tank 140 | Feed/Production of purified $CO-H_2$ mixture | Repressurised from equalisation tank 534 |

EP 0 317 235 B1

| Step No: | Duration (secs) | Vessel 501 | Vessel 502 | Vessel 503 |
|---|---|---|---|---|
| 14 | 72 | Purge from second purge pipeline 513 to feed tank 140 | Feed/Production of purified $CO-H_2$ mixture; | Repressurise with first stage product via pipeline 512 and pass gas from equalisation tank 534 to feed tank 140 |
| 15 | 12 | Repressurise via second purge pipeline 513 | Depressurise to equalisation tank 534 | Feed/Production of purified $CO-H_2$ mixture |
| 16 | 6 | Repressurise via second purge pipeline 513 | Depressurise to waste tank 160 | Feed/Production of purified $CO-H_2$ mixture |
| 17 | 34 | Repressurise via second purge pipeline 513 | Depressurise to feed tank 140 | Feed/Production of purified $CO-H_2$ mixture |
| 18 | 60 | Repressurise via second purge pipeline 513 | Purge from first purge pipeline 512 to atmosphere | Feed/Production of purified $CO-H_2$ mixture |
| 19 | 14 | Repressurise from equalisation tank 534 | Purge from second purge pipeline 513 to waste tank 160 | Feed/Production of purified $CO-H_2$ mixture |

| Step No: | Duration (secs) | Vessel 501 | Vessel 502 | Vessel 503 |
|---|---|---|---|---|
| 20 | 12 | Repressurise from equalisation tank 534 | Purge from second purge pipeline 513 to feed tank 140 | Feed/Production of purified $CO-H_2$ mixture |
| 21 | 72 | Repressurise with first stage product via pipeline 512 and pass gas from equalisation tank 534 to feed tank 140 | Purge from second purge pipeline 513 to feed tank 140 | Feed/Production of purified $CO-H_2$ mixture |

TABLE 6

STEP 1   VALVES OPEN :  518,521,527,529,531,
         VALVES SHUT :  519,520,522,523,524,525,526,528,530,532,535,536,537,538,539,540,541.542

STEP 2   VALVES OPEN :  518,521,529,537,538
         VALVES SHUT :  519,520,522,523,524,525,526,527,528,530,531,532,535,,536,539,540,541,542

STEP 3   VALVES OPEN :  518,521,529,537,539
         VALVES SHUT :  519,520,522,523,524,525,526,527,528,530,531,532,535,536,538,540,541,542

STEP 4   VALVES OPEN :  518,521,524,527,529,542
         VALVES SHUT :  519,520,522,523,525,526,528,530,531,532,535,536,537,538,539,540,541

STEP 5   VALVES OPEN :  518,521,526,530,531,537,538
         VALVES SHUT :  519,520,522,523,524,525,527,528,529,532,535,536,539,540,541,542

STEP 6   VALVES OPEN :  518,521,526,530,531,537,539,
         VALVES SHUT :  519,520,522,523,524,525,527,528,529,532,535,536,538,540,541,542

STEP 7   VALVES OPEN :  518,521,524,526,530,532,537,539
         VALVES SHUT :  519,520,522,523,525,527,528,529,531,535,536,538,540,541,542

EP 0 317 235 B1

STEP 8    VALVES OPEN :  519,522,525,530,531,

          VALVES SHUT :  518,520,521,523,524,526,527,528,529,532,535,536,537,538,539,540,541,542


STEP 9    VALVES OPEN :  519,522,530,535,538,

          VALVES SHUT :  518,520,521,523,524,525,526,527,528,529,531,532,536,537,539,540,541,542


STEP 10   VALVES OPEN :  519,522,530,535,539

          VALVES SHUT :  518,520,521,523,524,525,526,527,528,529,531,532,536,537,538,540,541,542


STEP 11   VALVES OPEN :  519,522,524,525,530,540

          VALVES SHUT :  518,520,521,523,526,527,528,529,531,532,535,536,537,538,539,541,542


STEP 12   VALVES OPEN :  519,522,527,528,531,535,538

          VALVES SHUT :  518,520,521,523,524,525,526,529,530,532,536,537,539,640,541,542


STEP 13   VALVES OPEN :  519,522,527,528,535,539

          VALVES SHUT :  518,520,521,523,524,525,526,529,530,532,536,537,538,540,541,542


STEP 14   VALVES OPEN :  519,522,524,527,528,532,535,539

          VALVES SHUT :  518,520,521,523,525,526,529,530,531,536,537,538,540,541,542


STEP 15   VALVES OPEN :  520,523,526,528,531,

          VALVES SHUT :  518,519,521,522,524,525,527,529,530,532,535,536,537,538,539,540,541,542

STEP 16

VALVES OPEN : 520,523,528,536,538,

VALVES SHUT : 518,519,521,522,524,525,526,527,529,530,531,532,535,537,539,540,541,542

STEP 17

VALVES OPEN : 520,523,528,536,539

VALVES SHUT : 518,519,521,522,524,525,526,527,529,530,531,532,535,537,538,540,541,542

STEP 18

VALVES OPEN : 520,523,524,526,528,541

VALVES SHUT : 518,519,521,522,525,527,529,530,531,532,535,536,537,538,539,540,542

STEP 19

VALVES OPEN : 520,523,525,529,531,536,538

VALVES SHUT : 518,519,521,522,524,525,526,527,528,530,532,535,537,539,540,541,542

STEP 20

VALVES OPEN : 520,523,525,529,531,536,539

VALVES SHUT : 518,519,521,522,524,526,527,528,530,532,535,537,538,540,541,542

STEP 21

VALVES OPEN : 520,523,524,525,529,532,536,539

VALVES SHUT : 518,519,521,522,526,527,528,530,531,535,537,538,540,541,542

The separation of the purified gas mixture of carbon monoxide and hydrogen produced in the first stage 500 of the plant shown in Figure 5 is effected in the second stage 501. The second stage uses three adsorbent vessels 550, 551 and 552 each containing a bed 553 of zeolite molecular sieve effective to make a separation between carbon monoxide and hydrogen by preferentially adsorbing the carbon monoxide. Each of the vessels 550, 551 and 552 has at its bottom a gas port 554 and at its top a gas port 555. The gas ports 554 can be selectively placed in communication with the pipeline 511, a carbon monoxide

24

withdrawal pipeline 556 having a vacuum pump 557 disposed therein and terminating in a carbon monoxide collection vessel 558, and a carbon monoxide purge pipeline 559 having a flow control valve 560 disposed therein.

The gas ports 555 of the vessels 550, 551 and 552 are able selectively to be placed in communication with the mixer 118 (shown in Figure 1) whereby hydrogen-enriched gas can be returned to the PSA plant 122 for separation into a hydrogen product. The ports 555 of the vessels 550, 551 and 552 are also able selectively to be placed in communication with the second purge gas pipeline 513 whereby a purge gas comprising carbon monoxide and hydrogen may be supplied to the first stage 500 of the plant shown in Figure 5.

Withdrawal of carbon monoxide product from the tank 558 may be made by opening valve 562 in an outlet 563.

Various stop valves are associated with the ports 554 and 555 so as to determine which pipelines communicate with each of the vessels 550, 551 and 552 at any time in an operating cycle. Thus, gas ports 554 have associated therewith stop valves 564, 565 and 566 each of which, when open, places the respective vessel in communication with pressurised purified gas mixture comprising carbon monoxide and hydrogen from the pipeline 551. The ports 555 are associated with stop valves 567, 568 and 569 each of which, when open, places its respective vessel in communication with the pipeline 561 whereby unadsorbed gas may be returned to mixer 118 in the plant shown in Figure 1.

The vessels 550, 551 and 552 have stop valves 570, 571 and 572, respectively, associated therewith to enable them to be purged at the end of the adsorption step. Each of these valves, when opened, permits gas to flow from the carbon monoxide purge pipeline 559 into the respective vessel through its gas port 554. In addition, the vessels, are provided with stop valves 573, 574 and 575, respectively, which, when open, permits gas released or purged from the respective vessel to be supplied through the gas port 555 to the pipeline 513 for use in the first stage of the process. In addition, each of the stop valves 576, 577 and 578 permits the bed 553 in the respective vessel to be placed in communication with the vacuum pump 557 through the gas ports 554 whereby a vacuum is applied to the bed to desorb carbon monoxide therefrom and pass the carbon monoxide product to the tank 558.

The stop valves are operated by means well known in the art for the production of carbon monoxide product in syncronisation with the cycle performed in the first stage 500 of the plant shown in Figure 5. The vessel 550 is placed in communication through its port 554 with a purified and pressurised gas mixture comprising hydrogen and carbon monoxide fed by the first stage 500 of the plant to the pipeline 511. The bed 553 of adsorbent selectively adsorbs carbon monoxide from this mixture to form a hydrogen enriched gas mixture which passes out of the vessel 550 through the port 555 into the hydrogen-enriched gas mixture return pipeline 561. Typically, this adsorption step is continued for a period of about three to four minutes until the adsorbent is fully charged with adsorbed carbon monoxide. The next step is to vent unadsorbed gas consisting mainly of hydrogen to the pipeline 513. Accordingly, communication of the vessel 550 with the pipelines 511 and 561 is ended and thereupon the vessel 550 is placed in communication with the pipeline 513 through its port 555. Typically, unadsorbed gas is vented to the pipeline 513 for a period of from 2 to 30 seconds. Although the pressure in the bed 553 falls significantly during this step, the pressure drop is not sufficient to remove hydrogen completely. The next step is to purge remaining unadsorbed hydrogen from the bed 553 in the vessel 550. Accordingly, the bed 553 is placed in communication with the pipeline 559 to permit carbon monoxide product to flow into the vessel 550 through its port 554. The resulting mixture of carbon monoxide and hydrogen passes from the vessel 550 into the pipeline 513. Typically, this step takes about three minutes and is continued until only minute traces of hydrogen remain in the vessel 550. Communication between the vessel 550 and the pipelines 513 and 531 is then discontinued and the vessel 550 is placed in communication with the pipeline 556 through its port 554 to enable the vacuum pump 557 to lower the pressure in the bed to below atmospheric pressure whereby carbon monoxide is desorbed from the adsorbent and withdrawn as product. Typically, the vacuum pump 557 is effective to lower the pressure in the vessel 550 to about 100 Torr. The evacuation of the vessel 550 typically continues for a period of time of about three to four minutes until most of the carbon monoxide has been withdrawn therefrom.

While the above described cycle of operations is repeatedly performed using the vessel 550, complementary cycles are performed using the vessels 551 and 552 in appropriate phase relation with the cycles performed using the vessel 550. The respective phasing of the cycles and the positions of the stop valves required to effect switching from step to step is shown in Tables 7 and 8 below. It is to be appreciated that the steps of the process set out in Tables 7 and 8 correspond to the steps shown in Tables 5 and 6.

| Step No: | Duration (secs) | Vessel 550 | Vessel 551 | Vessel 552 |
|---|---|---|---|---|
| 1 | 12 | Evacuate/Produce CO product | Purge of pipeline 513 | Adsorb CO |
| 2 | 6 | Evacuate/Produce CO product | Purge of pipeline 513 | Adsorb CO |
| 3 | 34 | Evacuate/Produce C0 product | Purge of pipeline 513 | Adsorb CO |
| 4 | 60 | Evacuate/Produce CO Product | Purge of pipeline 513 | Adsorb CO |
| 5 | 14 | Adsorb CO | Evacuate/Produce CO product | Vent to pipeline 513 |
| 6 | 12 | Adsorb CO | Evacuate/Produce CO product | Vent to pipeline 513 |
| 7 | 72 | Adsorb CO | Evacuate/Produce CO product | Purge to pipeline 513 |
| 8 | 12 | Adsorb CO | Evacuate/Produce CO product | Purge to pipeline 513 |
| 9 | 6 | Adsorb CO | Evacuate/Produce CO product | Purge to pipeline 513 |
| 10 | 34 | Adsorb CO | Evacuate/Produce CO product | Purge to pipeline 513 |
| 11 | 60 | Adsorb CO | Evacuate/Produce CO product | Purge to pipeline 513 |
| 12 | 14 | Vent to pipeline 513 | Adsorb CO | Evacuate/Produce CO product |
| 13 | 12 | Vent to pipeline 513 | Adsorb CO | Evacuate/Produce CO product |
| 14 | 72 | Purge to pipeline 513 | Adsorb CO | Evacuate/Produce CO product |
| 15 | 12 | Purge to pipeline 513 | Adsorb CO | Evacuate/Produce CO product |
| 16 | 6 | Purge to pipeline 513 | Adsorb CO | Evacuate/Produce CO product |
| 17 | 34 | Purge to pipeline 513 | Adsorb CO | Evacuate/Produce CO product |
| 18 | 60 | Purge to pipeline 513 | Adsorb CO | Evacuate/Produce CO product |
| 19 | 14 | Evacuate/Produce CO product | Vent to pipeline 531 | Adsorb CO |
| 20 | 12 | Evacuate/Produce CO product | Vent to pipeline 531 | Adsorb CO |
| 21 | 72 | Evacuate/Produce CO product | Purge to pipeline 531 | Adsorb CO |

## TABLE 8

STEP 1     VALVES OPEN : 566,569,571,574,576

             VALVES SHUT : 564,565,567,568,570,572,573,575,577,578

STEP 2     VALVES OPEN : 566,569,571,574,576

             VALVES SHUT : 564,565,567,568,570,572,573,575,577,578

STEP 3     VALVES OPEN : 566,569,571,574,576

             VALVES SHUT : 564,565,567,568,570,572,573,575,577,578

STEP 4     VALVES OPEN : 566,569,571,574,576

             VALVES SHUT : 564,565,567,568,570,572,573,575,577,578

STEP 5     VALVES OPEN : 564,567,575,577

             VALVES SHUT : 565,566,568,569,570,571,572,573,574,576,578

STEP 6     VALVES OPEN : 564,567,575,577

             VALVES SHUT : 565,566,568,569,570,571,572,573,574,576,578

STEP 7     VALVES OPEN : 564,567,572,575,577

             VALVES SHUT : 565,566,568,569,570,571,573,574,576,578

STEP 8     VALVES OPEN : 564,567,572,575,577

             VALVES SHUT : 565,566,568,569,570,571,573,574,576,578

STEP 9     VALVES OPEN : 564,567,572,575,577

             VALVES SHUT : 565,566,568,569,570,571,573,574,576,578

STEP 10    VALVES OPEN : 564,567,572,575,577

             VALVES SHUT : 565,566,568,569,570,571,573,574,576,578

EP 0 317 235 B1

| STEP 11 | VALVES OPEN : | 564,567,572,575,577 |
|---|---|---|
| | VALVES SHUT : | 565,566,568,569,570,571,573,574,576,578 |

| STEP 12 | VALVES OPEN : | 565,568,573,578 |
|---|---|---|
| | VALVES SHUT : | 564,566,567,569,570,571,572,574,575,576,577 |

| STEP 13 | VALVES OPEN : | 565,568,573,578 |
|---|---|---|
| | VALVES SHUT : | 564,566,567,569,570,571,572,574,575,576,577 |

| STEP 14 | VALVES OPEN : | 565,568,570,573,578 |
|---|---|---|
| | VALVES SHUT : | 564,566,567,569,571,572,574,575,576,577 |

| STEP 15 | VALVES OPEN : | 565,568,570,573,578 |
|---|---|---|
| | VALVES SHUT : | 564,566,567,569,571,572,574,575,576,577 |

| STEP 16 | VALVES OPEN : | 565,568,570,573,578 |
|---|---|---|
| | VALVES SHUT : | 564,566,567,569,571,572,574,575,576,577 |

| STEP 17 | VALVES OPEN : | 565,568,570,573,578 |
|---|---|---|
| | VALVES SHUT : | 564,566,567,569,571,572,574,575,576,577 |

| STEP 18 | VALVES OPEN : | 565,568,570,573,578 |
|---|---|---|
| | VALVES SHUT : | 564,566,567,569,571,572,574,575,576,577 |

| STEP 19 | VALVES OPEN : | 566,569,574,576 |
|---|---|---|
| | VALVES SHUT : | 564,565,567,568,570,571,572,573,575,577,578 |

| STEP 20 | VALVES OPEN : | 566,569,574,576 |
|---|---|---|
| | VALVES SHUT : | 564,565,567,568,570,571,572,573,575,577,578 |

| STEP 21 | VALVES OPEN : | 566,569,571,574,576 |
|---|---|---|
| | VALVES SHUT : | 564,565,567,568,570,572,573,575,577,578 |

The method and apparatus according to the invention are further illustrated by the following example.

EXAMPLE 1

Referring to Figure 1, a stream of butane at a temperature of 316°C (600°F) and a pressure of 1894 kPa (260 psig) is fed to the inlet 106 of the reformer 102 at a dry gas flow rate of $73m^3h^{-1}$ (2590 scfh). The unit $m^3h^{-1}$ (scfh) used herein is the flow rate of gas expressed in cubic metres per hour (cubic feet per hour) at a temperature of 70°C and a pressure of 101.325 kPa (1 atmosphere absolute). The butane is

28

EP 0 317 235 B1

reacted in the reformer 102 with steam supplied through the inlet 106 at a flow rate of 1387m³h⁻¹ (49028 scfh), a temperature of 371°C (700°F), and a pressure of 1894 kPa (260 psig). The butane is also reacted with compressed carbon dioxide-enriched gas mixture supplied from the pipeline 170 via the compressor 172 to the inlet 108 at a flow rate of 283m³h⁻¹ (260 psig). In order to provide the necessary heat to ensure that the reforming reactions proceed in the desired forward direction, butane fuel is fed to the inlet 110 at a pressure of 239 kPa (20 psig), a temperature of 24°C (75°F) and a flow rate of 1337 scfh and is combusted in the reformer 102. Also combusted therein is waste gas from the tank 160 which is supplied to the inlet 112 at a temperature of 24°C (75°F), a pressure of 122 kPa (3 psig) and a flow rate of 256m³h⁻¹ (9047 scfh) and is combusted in the reformer 102. A gas mixture flows from the reformer 102 to the cooler 116 through its outlet 114 at a temperature of 816°C (1500°F) and a pressure of 1618 kPa (220 psig). Its flow rate is 2209m³h⁻¹ (78045 scfh) on a wet gas basis and 1237m³h⁻¹ (43713 scfh) on a dry gas basis. The composition of the gas mixture, excluding water, is 61.5 mole percent of hydrogen, 16.4 mole percent of carbon monoxide, 1.6 mole percent of methane and 20.5 mole percent of carbon dioxide. After removal of substantially all of the water in the cooler 116, the gas mixture is mixed in the mixer 118 with a gas stream from the PSA separation plant 148 to produce a feed to the PSA separation plant 122 having, excluding water vapour, the following composition: 68.9 mole percent of hydrogen; 13.3 mole percent of carbon monoxide; 1.3 mole percent of methane; and 16.5 mole percent of carbon dioxide. This gas mixture is fed to the inlet 120 of the separator 122 at a dry gas flow rate of 1536m³h⁻¹ (54262 scfh), a pressure of 1515 kPa (205 psig) and a temperature of 24°C (75°F). In the separator 122, the gas mixture is separated into a product hydrogen stream containing less than 1 volume per million of carbon monoxide and no measurable traces of methane or carbon dioxide, at a flow rate of 594m³h⁻¹ (21000 scfh), a temperature of 24°C (75°F) and pressure of 1480 kPa (200 psig). In addition, there is fed to the tank 140 a carbon monoxide enriched gas mixture having, excluding water vapour, the following composition; hydrogen - 66.0 mole percent; carbon monoxide - 32.5 mole percent; methane - 1.2 mole percent; carbon dioxide - 0.3 mole percent. This gas mixture is withdrawn from the separator 122 through its outlet 130 at a dry gas flow rate of 18755 scfh and has a temperature of 24°C (75°F) and a pressure of 170 kPa (10 psig).

The separator 122 also produces a carbon dioxide-enriched gas mixture which leaves through the outlet 132 at a flow rate of 411 m³h⁻¹ (14507 scfh) and has a temperature of 24°C (75°F) and a pressure which can fluctuate between 122 and 136 kPa (3 and 5 psig). The carbon dioxide-enriched gas mixture has, excluding water vapour, the following composition : hydrogen - 27.6 mole per cent; carbon monoxide 7.7 mole per cent; methane - 3.3 mole per cent; and carbon dioxide 61.4 mole per cent.

The carbon monoxide-enriched gas mixture is withdrawn from the tank 140 by the compressor 142 at the same average rate as it enters the tank 140 and is separated in PSA separation plant 148 to produced a carbon monoxide product that is withdrawn through the outlet 164 at a flow rate of 103 m³h⁻¹ (3656 scfh), and a temperature of 24°C (75°F). The resulting carbon monoxide product contains less than 1500 vpm of hydrogen, less than 200 vpm of methane, and less than 10 vpm of carbon dioxide. The separation plant 148 also produces a hydrogen-rich gas stream which flows from the outlet 168 back to the mixer 118 where it is mixed with cooled gas from the reformer 102 and a carbon dioxide-enriched gas stream from the first stage which is withdrawn through the outlet 156 and mixed with that part of the carbon dioxide-enriched gas mixture produced by the PSA separation plant 122 by-passing the tank 136. The resulting gas mixture has a composition, excluding water vapour, as follows : hydrogen - 34.5 mole per cent; carbon monoxide - 30.2 mole per cent; methane - 4.2 mole per cent; carbon dioxide 31.1 mole per cent.

**Claims**

1. A method of forming hydrogen and carbon monoxide products from hydrocarbon, comprising reforming hydrocarbon to form a gas mixture including hydrogen, carbon monoxide, and carbon dioxide, and subjecting the gas mixture to separation by pressure swing adsorption to produce a hydrogen product, a carbon monoxide product and a gas mixture enriched in carbon dioxide, wherein the hydrocarbon is reformed with at least some of the gas mixture enriched in carbon dioxide or with carbon dioxide from a separate source, characterised in that steam is employed in addition to carbon dioxide in the reforming of the hydrocarbon, and the separation by pressure suing adsorption is performed in first and second stages, the first stage producing the hydrogen product, the gas mixture enriched in carbon dioxide, and a gas mixture enriched in carbon monoxide, at least some of the gas mixture enriched in carbon monoxide being separated in the second stage to produce the carbon monoxide product.

2. A method according to claim 1, wherein in the first stage of separation, the gas mixture enriched in carbon monoxide and the gas mixture enriched in carbon dioxide are taken from different positions

29

relative to the adsorbent.

3. A method according to claim 1 or claim 2, wherein the first stage of separation is performed by sorptive separators comprising a plurality of pairs of first and second adsorptive regions in series comprising adsorbent on which carbon monoxide is more strongly adsorbed than hydrogen but less strongly adsorbed than carbon dioxide, each pair of regions receiving at one end the gas mixture comprising hydrogen, carbon monoxide and carbon dioxide, and having the gas mixture enriched in carbon dioxide withdrawn therefrom at that end, the hydrogen product withdrawn from the other end thereof, and the gas mixture comprising carbon monoxide withdrawn from intermediate the first and second region.

4. A method according to claim 1 or claim 2, wherein the first stage of separation is performed by repeating a cycle of operating steps including passing said gas mixture through first and second adsorptive regions in series, both said adsorptive regions comprising adsorbent on which carbon monoxide is more strongly adsorbed than hydrogen but less strongly adsorbed than carbon dioxide, withdrawing said hydrogen product from the downstream end of the second region, stopping admission of the said gas mixture to the first adsorptive region, withdrawing said gas mixture enriched in carbon monoxide from both adsorbent regions at a location intermediate said first and second adsorbent regions, and then withdrawing said gas mixture enriched in carbon dioxide from the feed end of the first adsorbent region.

5. A method according to claim 3 or claim 4, wherein there are at least four pairs of said first and second adsorptive regions, each pair performing the cycle of operations in chosen phase relationship with the others and in each cycle of operations intermediate the steps of producing hydrogen product and the gas mixture enriched in carbon monoxide, the pressures in the first and second adsorptive regions are equalised with the pressures in another of the pairs of first and second adsorptive regions, and wherein after the step of producing the gas mixture enriched in carbon dioxide, the first and second adsorptive regions are placed in communication with another pair of first and second regions at a higher pressure so as to build up the pressure to a first level, and then pressure is increased again by repressurising the beds with product hydrogen.

6. A method according to claim 5, wherein the gas mixture enriched in carbon monoxide is withdrawn from both said first and second adsorbent regions simultaneously.

7. A method according to claim 5, wherein the gas mixture enriched in carbon monoxide is withdrawn first from the second adsorptive region and then from the first adsorptive region, and during withdrawal of the gas mixture from said second adsorptive region, a portion of said gas mixture enriched in carbon dioxide is introduced into the first adsorptive region from its feed end.

8. A method according to any one of the preceding claims, wherein the second stage of separation comprises removing constituents more readily adsorbable than carbon monoxide from the gas mixture in a first bed of adsorbent adsorbing carbon monoxide from the gas mixture in a first bed of adsorbent adsorbing carbon monoxide in a second bed of adsorbent and generating the carbon monoxide product by desorbing the carbon monoxide at sub-atmospheric pressure.

9. Apparatus for forming hydrogen and carbon monoxide products from hydrocarbon comprising a reformer (102) for converting hydrocarbon to gas mixture comprising hydrogen, carbon monoxide and carbon dioxide, a means (122, 148) for separating said gas mixture by pressure swing adsorption to produce a hydrogen product, a carbon monoxide product and a gas mixture enriched in carbon dioxide, and means (108) for introducing at least some of the gas mixture enriched in carbon dioxide or carbon dioxide from a separate source into the reformer (102) for reaction with the hydrocarbon, characterised in that the reformer (102) has an inlet (106) for the introduction thereto of steam, and the means (122, 148) for separating the gas mixture comprising hydrogen, carbon monoxide and carbon dioxide comprises a first group of adsorbers (124, 126) for producing the hydrogen product, the gas mixture enriched in carbon dioxide, and a gas mixture enriched in carbon monoxide, and a second group of adsorbers (150,152) for separating the carbon monoxide product from the gas mixture enriched in carbon monoxide.

**10.** Apparatus according to claim 9, wherein the first group of sorptive separators (124,126) comprises a plurality of pairs (202, 212, 204, 214, 206, 216; and 208, 218) of first and second adsorptive beds (210; 217) in series comprising adsorbent on which carbon monoxide is more strongly adsorbed than hydrogen but less strongly adsorbed than carbon dioxide, each pair (202, 212, 204, 214, 206, 216; and 208, 218) of beds (210; 217) having at one end a port (203) for the introduction of the gas mixture comprising hydrogen, carbon monoxide and carbon dioxide, and for the subsequent withdrawal of the gas mixture enriched in carbon dioxide, and at the opposite end a port (207) for the withdrawal of hydrogen product, and wherein there is a conduit (236) for the withdrawal of gas mixture enriched in carbon monoxide from intermediate said first and second beds (210; 217).

**Patentansprüche**

**1.** Ein Verfahren zur Bildung von Wasserstoff- und Kohlenmonoxidprodukten aus Kohlenwasserstoff, das umfaßt die Reformierung von Kohlenwasserstoff, um ein Gasgemisch mit Wasserstoff, Kohlenmonoxid und Kohlendioxid zu erzeugen, und das Unterwerfen des Gases einer Trennung durch Druckschwingungsadsorption, um ein Wasserstoffprodukt, ein Kohlenmonoxidprodukt und ein mit Kohlendioxid angereichertes Gasgemisch zu erzeugen, worin der Kohlenwasserstoff mit zumindest einem Teil des Gasgemischs, das mit Kohlendioxid angereichert ist, oder mit Kohlendioxid von einer separaten Quelle reformiert wird,

dadurch **gekennzeichnet,**

daß Dampf zusätzlich zu dem Kohlendioxid bei der Reformierung des Kohlenwasserstoffs verwendet wird und die Trennung durch Druckschwinungsadsorption in ersten und zweiten Stufen durchgeführt wird, wobei die erste Stufe das Wasserstoffprodukt, das mit Kohlendioxid angereicherte Gasgemisch und ein Gasgemisch, das mit Kohlenmonoxid angereichert ist, erzeugt, und zumindest ein Teil des mit Kohlenmonoxid angereicherten Gasgemischs in der zweiten Stufe getrennt wird, um das Kohlenmonoxidprodukt zu erzeugen.

**2.** Ein Verfahren nach Anspruch 1, worin in der ersten Stufe der Trennung das mit Kohlenmonoxid angereicherte Gasgemisch und das mit Kohlendioxid angereicherte Gasgemisch von verschiedenen Stellen relativ zu dem Adsorptionsmittel genommen werden.

**3.** Ein Verfahren nach Anspruch 1 oder Anspruch 2, worin die erste Stufe der Trennung durch sorptive Trennvorrichtungen durchgeführt wird, die eine Mehrzahl von Paaren von ersten und zweiten adsorptiven Bereichen in Reihe umfassen, die jeweils ein Adsorptionsmittel enthalten, an denen Kohlenmonoxid stärker adsorbiert wird als Wasserstoff aber weniger stark adsorbiert wird als Kohlendioxid, wobei jedes Paar von Bereichen an einem Ende das Gasgemisch mit Wasserstoff, Kohlenmonoxid und Kohlendioxid erhalten und aus ihnen das Gasgemisch, das mit Kohlendioxid angereichert ist, auch an dem Ende herausgezogen wird, wobei das Wasserstoffprodukt an dem anderen Ende aus diesen abgezogen wird und das Gasgemisch, welches Kohlenmonoxid enthält, von einem Zwischenbereich zwischen dem ersten und zweiten Bereich abgezogen wird.

**4.** Ein Verfahren nach Anspruch 1 oder Anspruch 2, worin die erste Stufe der Trennung durchgeführt wird, indem ein Zyklus von Operationsschritten wiederholt durchgeführt wird, die umfassen ein Durchströmen des Gasgemischs durch erste und zweite in Reihe geschaltete adsorptive Bereiche, wobei beide adsorptive Bereiche ein Adsorptionsmittel enthalten, an dem Kohlenmonoxid stärker adsorbiert wird als Wasserstoff aber weniger stark adsorbiert wird als Kohlendioxid, ein Abziehen des Kohlenwasserstoffprodukts von dem stromabwärtigen Ende des zweiten Bereiches, eine Unterbrechung der Zuführung des Gasgemischs zu dem ersten adsorptiven Bereich, ein Abziehen des mit Kohlenmonoxid angereicherten Gasgemischs aus beiden Adsorptionsmittelbereichen an einer Stelle zwischen den ersten und zweiten Adsorptionsmittelbereichen, und dann das Abziehen des mit Kohlendioxid angereicherten Gasgemischs von dem Zuführende des ersten Adsorptionsmittelbereichs.

**5.** Ein Verfahren nach Anspruch 3 oder Anspruch 4, worin zumindest vier Paare von ersten und zweiten adsorptiven Bereichen vorgesehen sind, wobei jedes Paar den Zyklus von Operationen in einer gewählten Phasenbeziehung zu den anderen durchführt und in jedem Zyklus von Operationen zwischen den Schritten der Erzeugung des Wasserstoffprodukts und des mit Kohlenmonoxid angereicherten Gasgemischs die Drücke in den ersten und zweiten adsorptiven Bereichen mit den Drücken in einem anderen der Paare von ersten und zweiten adsorptiven Bereichen ausgeglichen werden, und worin nach dem Schritt der Erzeugung des mit Kohlendioxid angereicherten Gasgemischs die ersten und zweiten adsorptiven Bereiche in Verbindung mit einem anderen Paar von ersten und zweiten Bereichen auf einem höheren Druck gebracht werden, um den Druck auf einen ersten Level aufzubauen, und dann wird der Druck wieder durch nochmalige Unterdrucksetzung der Betten mit Produktwasserstoff erhöht wird.

6. Ein Verfahren nach Anspruch 5,
   worin das mit Kohlenmonoxid angereicherte Gasgemisch sowohl aus den ersten als auch zweiten Adsorptionsmittelbereichen gleichzeitig abgezogen wird.

7. Ein Verfahren nach Anspruch 5,
   worin das mit Kohlenmonoxid angereicherte Gasgemisch zuerst aus dem zweiten adsorptiven Bereich und dann von dem ersten adsorptiven Bereich abgezogen wird, und während des Abziehens des Gasgemischs aus dem zweiten adsorptiven Bereich ein Teil des mit Kohlendioxid angereicherten Gasgemischs dem ersten adsorptiven Bereich von seinem Zuführende her zugeführt wird.

8. Ein Verfahren nach einem der vorhergehenden Ansprüche,
   worin die zweite Stufe der Trennung umfaßt das Entfernen von Bestandteilen, die einfacher von dem Gasgemisch als Kohlenmonoxid adsorbierbar sind, in einem ersten Adsorptionsmittelbett, das Adsorbieren von Kohlenmonoxid aus dem Gasgemisch in einem ersten Adsorptionsmittelbett, das Adsorbieren von Kohlenmonoxid in einem zweiten Adsorptionsmittelbett und die Erzeugung des Kohlenmonoxidprodukts durch Desorbierung des Kohlenmonoxid bei unteratmosphärischem Druck.

9. Vorrichtung zur Bildung von Wasserstoff- und Kohlenmonoxidprodukten aus Kohlenwasserstoff, mit einem Reformer (102) zur Umwandlung von Kohlenwasserstoff in ein Gasgemisch mit Wasserstoff, Kohlenmonoxid und Kohlendioxid, einem Mittel (122, 148) zur Trennung des Gasgemischs durch Druckschwingungsadsorption, um ein Wasserstoffprodukt, ein Kohlenmonoxidprodukt und ein mit Kohlendioxid angereichertes Gasgemisch zu erzeugen, und einem Mittel (108) zur Einführung von zumindest einem Teil des mit Kohlendioxid angereichertem Gasgemischs oder von Kohlendioxid von einer separaten Quelle in den Reformer (102) zur Reaktion mit dem Kohlenwasserstoff,
   dadurch **gekennzeichnet,**
   daß der Reformer (102) einen Einlaß (106) zur Einführung eines Dampfes hat und das Mittel (122, 148) zur Trennung des Gasgemischs mit Wasserstoff, Kohlenmonoxid und Kohlendioxid eine erste Gruppe von Adsorbern (124, 126) zur Erzeugung des Wasserstoffprodukts, des mit Kohlendioxid angereicherten Gasgemischs und des mit Kohlenmonoxid angereicherten Gasgemischs und eine zweite Gruppe von Adsorbern (150, 152) zur Trennung des Kohlenmonoxidprodukts von dem mit Kohlenmonoxid angereicherten Gasgemisch umfaßt.

10. Vorrichtung nach Anspruch 9,
    worin die erste Gruppe von sorptiven Trennvorrichtungen (124, 126) eine Mehrzahl von Paaren (202, 212, 204, 214, 206, 216; und 208, 218) von ersten und zweiten adsorptiven Betten (210, 217) in Reihenschaltung umfaßt, die ein Adsorptionsmittel enthalten, an dem Kohlenmonoxid stärker als Wasserstoff adsorbiert wird aber weniger stark adsorbiert wird als Kohlendioxid, jedes Paar (202, 212, 204, 214, 206, 216; und 208, 218) von Betten (210; 217) an einem Ende eine Öffnung (203) zur Einführung des Gasgemischs mit Wasserstoff, Kohlenmonoxid und Kohlendioxid und zum anschließenden Abziehen des mit Kohlendioxid angereicherten Gasgemischs, und an den gegenüberliegenden Ende eine Öffnung (207) zum Abziehen des Wasserstoffprodukts aufweist, und worin eine Leitung (236) vorgesehen ist, um mit Kohlenmonoxid angereichertes Gasgemisch in einem Zwischenbereich zwischen den ersten und zweiten Betten (210, 217) abzuziehen.

**Revendications**

1. Procédé de formation d'hydrogène et de monoxyde de carbone comme produits obtenus à partir d'un hydrocarbure, ce procédé comprenant le reformage de l'hydrocarbure pour former un mélange gazeux comprenant de l'hydrogène, du monoxyde de carbone et du dioxyde de carbone, et la soumission du mélange gazeux à une séparation par adsorption avec variation cyclique de la pression pour produire un produit constitué par de l'hydrogène, un produit constitué par du monoxyde de carbone et un mélange gazeux enrichi en dioxyde de carbone, procédé selon lequel l'hydrocarbure est reformé avec au moins une partie du mélange gazeux enrichi en dioxyde de carbone ou avec du dioxyde de carbone provenant d'une source séparée, procédé caractérisé en ce qu'on utilise de la vapeur d'eau en plus du dioxyde de carbone dans le reformage de l'hydrocarbure, et en ce qu'on effectue la séparation par adsorption avec variation cyclique de la pression en opérant dans des premier et second étages, le premier étage produisant le produit constitué par l'hydrogène, le mélange gazeux enrichi en dioxyde de carbone et un mélange gazeux enrichi en oxyde de carbone, au moins une partie du mélange gazeux enrichi en monoxyde de carbone étant soumise à séparation dans le second étage pour produire le produit constitué par du monoxyde de carbone.

2. Procédé selon la revendication 1, dans lequel, dans le premier étage de la séparation, le mélange gazeux enrichi en du monoxyde de carbone et le mélange gazeux enrichi en du dioxyde de carbone sont prélevés à partir de positions différentes par rapport à l'adsorbant.

3. Procédé selon la revendication 1 ou la revendication 2, dans lequel la première étape de la séparation, (dans le premier),étage est effectuée à l'aide de séparateurs par sorption comprenant plusieurs paires de première et de seconde régions d'adsorption en série comprenant de l'adsorbant sur lequel le monoxyde de carbone est plus fortement adsorbé que l'hydrogène mais est moins fortement adsorbé que le dioxyde de carbone, chaque paire de régions recevant à une extrémité le mélange gazeux comprenant de l'hydrogène, du monoxyde de carbone et du dioxyde de carbone, et ayant le mélange gazeux, enrichi en dioxyde de carbone, soutiré de cette région à cette extrémité, le produit constitué par l'hydrogène étant soutiré de l'autre extrémité de cette région, et le mélange gazeux comprenant du monoxyde de carbone étant soutiré ou enlevé d'un endroit placé entre la première et la seconde région.

4. Procédé selon la revendication 1 ou la revendication 2, dans lequel la première étape de séparation effectuée dans le premier étage est réalisée par répétition d'un cycle d'étapes opératoires comprenant le passage dudit mélange gazeux à travers les première et seconde régions d'adsorption en série, ces deux régions d'adsorption comprenant de l'adsorbant sur lequel le monoxyde de carbone est plus fortement adsorbé que l'hydrogène mais est moins fortement adsorbé que le dioxyde de carbone, le soutirage dudit produit formé par de l'hydrogène de l'extrémité aval de la seconde région, l'arrêt de l'admission dudit mélange gazeux vers la première région d'adsorption, le soutirage dudit mélange gazeux, enrichi en monoxyde de carbone, des deux régions d'adsorbant en un site intermédiaire entre lesdites première et seconde régions d'adsorbant, puis le soutirage dudit mélange gazeux, enrichi en dioxyde de carbone, depuis l'extrémité d'alimentation de la première région d'adsorbant.

5. Procédé selon la revendication 3 ou la revendication 4, dans lequel il existe au moins quatre paires desdites première et seconde régions d'adsorption, chaque paire effectuant le cycle d'opérations en une relation de phase choisie par rapport aux autres et dans chaque cycle des opérations entre les étapes de production du produit constitué par l'hydrogène et du mélange gazeux enrichi en oxyde de carbone, les pressions dans les première et seconde régions d'adsorption sont égalisées avec les pressions dans une autre des paires des première et seconde régions d'adsorption ; et, après l'étape de production du mélange gazeux enrichi en dioxyde de carbone, les première et seconde régions de l'adsorption sont mises en communication avec une autre paire de première et seconde régions se trouvant à une pression supérieure de façon à augmenter la pression jusqu'à un premier niveau, puis la pression est augmentée à nouveau par repressurisation des lits à l'aide d'hydrogène produit.

6. Procédé selon la revendication 5, dans lequel le mélange gazeux enrichi en monoxyde de carbone est soutiré simultanément desdites première et seconde régions d'adsorbant.

7. Procédé selon la revendication 5, dans lequel le mélange gazeux enrichi en monoxyde de carbone est soutiré tout d'abord de la seconde région d'adsorption puis de la première région d'adsorption et, pendant le soutirage du mélange gazeux de ladite seconde région d'adsorption, une partie dudit mélange gazeux enrichi en dioxyde de carbone est introduite dans la première région d'adsorption à partir de son extrémité d'alimentation.

**8.** Procédé selon l'une quelconque des revendications précédentes, dans lequel la seconde étape de séparation comprend l'enlèvement de constituants, plus rapidement adsorbables que le monoxyde de carbone, du mélange gazeux dans un premier lit d'adsorbant, l'adsorption du monoxyde de carbone du mélange gazeux dans un premier lit d'adsorbant, l'adsorption du monoxyde de carbone dans un second lit d'adsorbant et la formation du monoxyde de carbone comme produit obtenu par désorption du monoxyde de carbone sous une pression inférieure à la pression atmosphérique.

**9.** Appareil pour former de l'hydrogène et du monoxyde de carbone comme produits obtenus à partir d'un hydrocarbure, cet appareil comprenant un reformeur (102) pour convertir l'hydrocarbure en un mélange gazeux comprenant de l'hydrogène, du monoxyde de carbone et du dioxyde de carbone, un moyen (122, 148) pour soumettre ce mélange gazeux à une séparation effectuée à l'aide d'une adsorption avec variation cyclique de la pression pour produire un produit constitué par de l'hydrogène, un produit constitué par du monoxyde de carbone et un mélange gazeux enrichi en dioxyde de carbone, et un moyen (108) pour introduire au moins une partie du mélange gazeux enrichi en dioxyde de carbone, ou du dioxyde de carbone provenant d'une source séparée, dans le reformeur (102) pour une réaction avec l'hydrocarbure, appareil caractérisé en ce que le reformeur (102) comporte une entrée (106) pour l'introduction de vapeur d'eau, et le moyen (122, 148) pour soumettre à séparation le mélange gazeux comprenant de l'hydrogène, du monoxyde de carbone et du dioxyde de carbone comprend un premier groupe d'adsorbeurs (124, 126) pour produire le produit constitué par l'hydrogène, le mélange gazeux enrichi en dioxyde de carbone et un mélange gazeux enrichi en monoxyde de carbone, et un second groupe d'adsorbeurs (150, 152) pour séparer le monoxyde de carbone comme produit obtenu à partir du mélange gazeux enrichi en monoxyde de carbone.

**10.** Appareil selon la revendication 9, dans lequel le premier groupe de séparateurs par sorption (124, 126) comprend un grand nombre de paires (202, 212, 204, 214, 206, 216 ; et 208, 218) de premier et second lits adsorbants (210 ; 217) en série comprenant de l'adsorbant sur lequel le monoxyde de carbone est plus fortement adsorbé que l'hydrogène mais est moins fortement adsorbé que le dioxyde de carbone, chaque paire (202, 212, 204, 214, 206, 216 et 208, 218) de lits (210 ; 217) comportant à une extrémité un orifice (203) pour l'introduction du mélange gazeux comprenant de l'hydrogène, du monoxyde de carbone et du dioxyde de carbone, et pour l'enlèvement subséquent du mélange gazeux enrichi en dioxyde de carbone, et à l'extrémité opposée un orifice (207) pour l'enlèvement de l'hydrogène comme produit, l'appareil comportant un conduit (236) pour le soutirage du mélange gazeux, enrichi en monoxyde de carbone, enlevé d'un site situé entre lesdits premier et second lits (210, 217).

34

FIG. 1.

EP 0 317 235 B1

FIG 2

FIG 3

# FIG. 4.

FIG. 5.